# EUROPÄISCHE PATENTSCHRIFT

(11) **EP 3 464 738 B1**
(45) Veröffentlichungstag und Bekanntmachung des Hinweises auf die Patenterteilung: **19.08.2020**
(21) Anmeldenummer: 17719483.4
(22) Anmeldetag: 24.04.2017
(51) Int. Cl.: E03C 1/08, E03C 1/084, E03C 1/10

(54) **SANITÄRE EINSETZEINHEIT**
SANITARY INSERTION UNIT
INSERT SANITAIRE

(30) Priorität: 28.05.2016 DE 202016003402 U
(43) Veröffentlichungstag der Anmeldung: 10.04.2019
(73) Patentinhaber: Neoperl GmbH, 79379 Müllheim (DE)
(72) Erfinder: TEMPEL, Marc, 79111 Freiburg (DE)
(74) Vertreter: Mertzlufft-Paufler, Cornelius
(86) Internationale Anmeldenummer: PCT/EP2017/000503
(87) Internationale Veröffentlichungsnummer: WO 2017/207080

(56) Entgegenhaltungen:
- DE-A1- 2 650 934
- DE-A1- 3 446 425
- DE-U1- 29 902 906
- DE-U1-202015 000 856
- DE-U1-212010 000 204

## Beschreibung

Die Erfindung betrifft eine sanitäre Einsetzeinheit mit einem Einsetzgehäuse, in welchem Einsetzgehäuse ein Ventil mit einem Ventilkolben vorgesehen ist, welcher Ventilkolben im Einsetzgehäuse verschieblich geführt und von einer Ruhestellung unter dem Druck des anströmenden Wassers gegen die Rückstellkraft wenigstens eines Rückstellelements bewegbar ist, wobei die Einsetzeinheit zumindest einen Bewegungsdämpfer aufweist, welcher die Bewegung des Ventilkolbens von der Ruhestellung in die Offenposition dämpft oder bremst.

Die Erfindung befasst sich auch mit der Verwendung einer solchen sanitären Einsetzeinheit.

Sanitäre Einsetzeinheiten sind bereits in unterschiedlichen Ausführungen für verschiedene Anwendungen bekannt. So hat man bereits Einsetzeinheiten geschaffen, die als Rückflussverhinderer dienen, um einen entgegen der Durchströmrichtung rückfließenden, eventuell mit Schmutzstoffen kontaminierten Wasserfluss zurück ins Leitungsnetz zu verhindern. Diese als Rückflussverhinderer ausgebildeten Einsetzeinheiten weisen ein zwischen zwei Leitungsabschnitten montierbares Einsetzgehäuse auf, in dem ein Ventil mit einem Ventilkolben vorgesehen ist. Dieser Ventilkolben ist im Einsetzgehäuse verschieblich geführt und von einer Ruhestellung, während der kein Wasser durch das Leitungsnetz strömt, unter dem Druck des nach Öffnen der Armatur anströmenden Wassers gegen die Rückstellkraft wenigstens eines Rückstellelements derart bewegbar, dass das Wasser in der üblichen Durchströmrichtung hindurchfließen kann.
Aus der DE 26 50 934 A1 ist bereits eine sanitäre Einsetzeinheit der eingangs erwähnten Art vorbekannt, die zum Einbau in den zu einer Wasserverbrauchsstelle führenden Ablaufstutzen eines Rohrtrenners bestimmt ist, um in der Offenstellung des Rohrtrenners, das heißt bei dessen aus dem Ablaufstutzen herausgefahrenem Kolbenrohr und damit vollständiger Abtrennung der Trinkwasserzuleitung von der Verbraucherstelle, den Ablaufstutzen flüssigkeitsdicht zu verschließen, um einen Rückbeziehungsweise Ausfluss des nicht selten mit zugesetzten Chemikalien oder dergleichen verschmutzten, im Verbraucherstellenleitungssystem stehenden Brauchwassers zu verhindern. Die vorbekannte Einsetzeinheit weist dazu ein Einsetzgehäuse auf, in dem ein Ventil mit einem Ventilkolben vorgesehen ist, welcher Ventilkolben im Einsetzgehäuse verschieblich geführt und von einer Ruhestellung unter dem Druck des anströmenden Wassers gegen die Rückstellkraft wenigstens eines Rückstellelements bewegbar ist. Um trotz des am Ventilkörper vorbeiströmenden Frischwassers diesen Ventilkörper ohne Flatter- und Drehschwingungen sicher zu führen, ist zur Dämpfung der Schiebebewegung des Ventilkolbens von der Ruhestellung in die Offenposition ein Bewegungsdämpfer vorgesehen, der als eine nach außen führende Druckausgleichs- und Dämpfungsbohrung ausgebildet ist. Die vorbekannte Einsetzeinheit ist weder dazu vorgesehen noch dazu geeignet, das aus einem Wasserauslauf austretende Wasservolumen auch bei einem schlagartigen Öffnen der Wasserleitung sanft anschwellen zu lassen.

Viele Auslaufarmaturen sind als Einhebelarmaturen ausgebildet, bei denen ein Bedienungshebel zum Öffnen und Schließen des Wasserstromes verschwenkt und zum Mischen von Warm- und Kaltwasser gedreht werden kann. Insbesondere auch bei solchen Auslaufarmaturen besteht häufig das Problem, dass die Auslaufarmatur, vielleicht auch unbeabsichtigt, derart rasch geöffnet wird, dass ein starker Wasserschwall im Waschbecken hart auftrifft, der dort unkontrolliert verspritzt und auch den Anwender selbst treffen kann.

Es besteht daher insbesondere die Aufgabe, eine sanitäre Einsetzeinheit der eingangs erwähnten Art zu schaffen, die auch bei einem schlagartigen Öffnen der Wasserleitung einen sanft anschwellenden Wasserstrom erzeugt.

Die erfindungsgemäße Lösung dieser Aufgabe besteht bei der sanitären Einsetzeinheit der eingangs erwähnten Art darin, dass der zumindest eine Bewegungsdämpfer als hydraulischer Dämpfer ausgestaltet ist, der ein Dämpfergehäuse hat, in welchem Dämpfergehäuse ein Dämpferkolben verschieblich geführt ist, wobei der Dämpferkolben während einer Schiebebewegung von der Ruhestellung in die Offenposition Öl oder dergleichen zähflüssiges Fluid von der einen Seite des Dämpferkolbens durch zumindest einen Verbindungskanal auf die andere Seite des Dämpferkolbens verdrängt.

Die erfindungsgemäße Einsetzeinheit weist ein Einsetzgehäuse auf, das im Wasserauslauf einer sanitären Auslaufarmatur montiert oder zwischen zwei Leitungsabschnitten einer Wasserleitung, beispielsweise in einem Eck- oder Anschlussventil, eingesetzt werden kann. Dabei soll die Einsetzeinheit bei einem schlagartigen Öffnen eines in der Wasserleitung vorgesehenen Auslaufventils einen sanft anschwellenden Wasserstrom erzeugen. Im Einsetzgehäuse der Einsetzeinheit ist dazu ein Ventil mit einem Ventilkolben vorgesehen, der von einer Ruhestellung unter dem Druck des gegen die Einsetzeinheit und dessen Ventilkolben anströmenden Wassers gegen die Rückstellkraft wenigstens eines Rückstellelements bewegbar ist. Dabei kann die Ruhestellung als Schließstellung des Ventils ausgestaltet oder als eine Durchflussposition ausgebildet sein, die gegenüber der Offenstellung einen reduzierten Durchflussquerschnitt bietet. Das Dämpfergehäuse, das im Einsetzgehäuse angeordnet ist und zumindest in der Offenstellung von dem durch das Einsetzgehäuse durchfließenden Wasser umspült wird, ist Bestandteil eines Bewegungsdämpfers der die Schiebebewegung des Ventilkolbens von der Ruhestellung in die Offenposition derart dämpft oder bremst, dass der Ventilkolben den Durchfluss des Wassers im Bereich der Einsetzeinheit nur langsam öffnet und der Wasserstrom selbst bei schlagartig geöffnetem Auslaufventil dementsprechend nur langsam anschwillt. Erfindungsgemäß ist dazu vorgesehen, dass der zumindest eine Bewegungsdämpfer als hydraulischer Dämpfer ausgestaltet ist, der ein Dämpfergehäuse hat, in welchem Dämpfergehäuse ein Dämpferkolben verschieblich geführt ist, wobei der Dämpferkolben während einer Schiebebewegung von der Ruhestellung in die Offenposition Öl oder dergleichen zähflüssiges Fluid von der einen Seite des Dämpferkolbens durch zumindest einen Verbindungskanal auf die andere Seite des Dämpferkolbens verdrängt. Eine solche Rückstelleinheit, die einen als hydraulischen Dämpfer ausgestalteten Bewegungsdämpfer aufweist, vermag die Schiebebewegung des Ventilkolbens von der Ruhestellung in die Offenposition besonders effektiv zu dämpfen beziehungsweise abzubremsen.

Dabei kann das wenigstens eine Rückstellelement beispielsweise auch als gummielastisches Rückstellelement ausgebildet sein. Eine besonders einfache und langlebige Ausführungsform gemäß der Erfindung sieht jedoch vor, dass das wenigstens eine Rückstellelement als Rückstellfeder ausgebildet ist.

Dabei wird eine einfache Konstruktion und eine leichte Montage der erfindungsgemäßen Einsetzeinheit noch begünstigt, wenn das wenigstens eine Rückstellelement als Druckfeder ausgebildet ist.

Damit der Bewegungsdämpfer diese Schiebebewegung des Ventilkolbens möglich einfach abbremsen kann, ist es vorteilhaft, wenn der Ventilkolben mit dem Dämpferkolben über eine Kolbenstange in Bewegungsverbindung steht. Dazu ist es zweckmäßig, wenn die Kolbenstange an ihrem entgegen der Strömungsrichtung orientierten ersten Stangenende mit dem Ventilkolben und ihrem in die Strömungsrichtung weisenden zweiten Stangenende mit dem Dämpferkolben verbunden ist.

Um den Dämpferkolben von der Offenposition aus wieder zurück in die Ruhestellung zu bewegen und um dabei erneut das Öl oder dergleichen zähflüssiges Fluid von der einen Seite des Dämpferkolbens durch den zumindest einen Verbindungskanal hindurch zu der anderen Seiten des Dämpferkolbens verdrängen zu können, ist es vorteilhaft, wenn das wenigstens eine Rückstellelement die der Durchströmrichtung der Einsetzeinheit abgewandte Stirnseite des Dämpferkolbens druckbeaufschlagt.

Dabei sieht eine besonders einfache Ausführungsform gemäß der Erfindung vor, dass das wenigstens eine Rückstellelement zwischen einem geschlossenen Gehäuseboden des Dämpfergehäuses und der der Durchströmrichtung abgewandten Stirnseite des Dämpferkolbens angeordnet ist.

Um den Bewegungsdämpfer leicht montieren zu können, ist es zweckmäßig, wenn das Dämpfergehäuse eine stirnseitige Gehäuseöffnung hat, die mittels zumindest einer ringscheibenförmigen Abdeckung verschlossen ist, deren Ringscheibenöffnung die Kolbenstange durchsetzt.

Zusätzlich oder stattdessen kann es vorteilhaft sein, wenn das Dämpfergehäuse gegenüber dem Einsetzgehäuse mittels eines ringscheibenförmigen Stopfens abgedichtet ist, dessen Ringscheibenöffnung von der Kolbenstange durchsetzt ist.

Dieser Stopfen kann in das Dämpfergehäuse eingelegt und am Gehäuseinnenumfang des Dämpfergehäuses lösbar gehalten sein. Zusätzlich ist es möglich, dass der Stopfen mittels der ringscheibenförmigen Abdeckung im Dämpfergehäuse gehalten oder gesichert ist.

Vorteilhaft ist es, wenn dieser Stopfen zwischen dem Gehäuseinnenumfang des Dämpfergehäuses und der dessen Ringscheibenöffnung durchsetzenden Kolbenstange abdichtet, so dass das Dämpfergehäuse, welches durch den Dämpferkolben in zwei Gehäuseabschnitte unterteilt ist, gegenüber dem außenliegenden Gehäuseinnenraum des Einsetzgehäuses dicht verschlossen ist.

Um das pro Zeiteinheit durchfließende Wasservolumen nach dem Öffnen des Auslaufventils möglichst langsam anschwellen zu lassen, ist es vorteilhaft, wenn der Ventilkolben des Ventils in der Ruhestellung an einem am Ventilsitz ausgebildeten und eine Durchflussöffnung umgrenzenden Umfangsrand im Einsetzgehäuse vorzugsweise partiell oder mit Spiel anliegt. Liegt der Ventilkolben des Ventils nur partiell oder auch nur mit Spiel am Ventilsitz an, kann auch in der Ruhestellung bereits eine geringe Wassermenge zwischen dem Ventilkolben und dessen Ventilsitz hindurchfließen und ein schlagartiges Trennen des Ventilkolbens vom Ventilsitz wird vermieden.

Demgegenüber ist der Ventilkolben des Ventils in dessen Offenstellung von dem als Ventilsitz ausgebildeten Umfangsrand im Einsetzgehäuse beabstandet.

Möglich ist es, dass die sanitäre Einsetzeinheit als unbelüfteter Strahlformer oder als Strahlbelüfter ausgebildet ist, welcher Strahlbelüfter bei Gebrauch das durchströmende Wasser mit Umgebungsluft durchmischt.

Ist die erfindungsgemäße Einsetzeinheit als Strahlbelüfter ausgebildet, ist es vorteilhaft, wenn dieser Strahlbelüfter einen Strahlzerleger hat, der das durchströmende Wasser bei Gebrauch in eine Vielzahl von Einzelstrahlen aufteilt. Ein solcher Strahlzerleger kann beispielsweise als Lochplatte ausgebildet sein, die eine Vielzahl von Einzelstrahlen bildender Durchflusslöcher hat.

Damit in das Gehäuseinnere des Einsetzgehäuses einer als Strahlbelüfter ausgebildeten Einsetzeinheit Umgebungsluft eingesaugt werden kann, die dort anschließend in einer Mischzone mit dem durchströmenden Wasser vermischt werden soll, ist es zweckmäßig, wenn in der Umfangswandung des Einsetzgehäuses zumindest eine Belüftungsöffnung mündet, die in einer in Strömungsrichtung vorzugsweise unmittelbar unterhalb dem Strahlzerleger angeordneten Ringzone der Umfangswandung vorgesehen ist. Die im Strahlzerleger vorgesehenen Durchflusslöcher verengen nämlich den Durchflussquerschnitt der erfindungsgemäßen Einsetzeinheit in diesem Bereich derart, dass auf der Abströmseite des Strahlzerlegers gemäß der Bernoullischen Gleichung ein Unterdruck entsteht. Mit Hilfe dieses Unterdrucks kann über die zumindest eine Belüftungsöffnung Umgebungsluft in das Innere des Einsetzgehäuses eingesaugt werden, die anschließend in der auf der Abströmseite des Strahlzerlegers angeordneten Mischzone mit den im Strahlzerleger gebildeten Einzelstrahlen durchmischt wird.

Damit die im Inneren des Einsetzgehäuses mit Umgebungsluft vermischten Einzelstrahlen wieder zu einem homogen austretenden und möglichst nicht-spritzenden Auslaufstrahl geformt werden, ist es vorteilhaft, wenn der Strahlbelüfter einen abströmseitigen Strömungsgleichrichter mit einer Waben-, Gitter- oder Netzstruktur aufweist, welche Waben-, Gitter- oder Netzstruktur durch einander an Kreuzungsknoten kreuzende Stege gebildet ist.

Dabei wird die Funktion des erfindungsgemäßen Einsetzteiles gegen Vandalismus gesichert und ein Hochdrücken des Strömungsgleichrichters sowie der entgegen der Strömungsrichtung folgenden Einsetzteile wird vermieden, wenn die Waben-, Gitter- oder Netzstruktur des Strömungsgleichrichters einstückig an das Einsetzgehäuse angeformt ist.

Um die im Strahlzerleger erzeugten Einzelstrahlen auch anschließend noch zusätzlich zerteilen und gut mit der in das Einsetzgehäuse eingesaugten Umgebungsluft vermischen zu können, ist es vorteilhaft, wenn zwischen dem Strahlzerleger und dem Strömungsgleichrichter wenigstens ein Einsetzteil mit einer Gitter- oder Netzstruktur aus einander an Kreuzungsknoten kreuzenden Stegen vorgesehen ist.

Die Gitter- oder Netzstrukturen der übereinanderliegenden Einsetzteile können in einem festgelegten Abstand zueinander positioniert werden, wenn das wenigstens eine Einsetzteil zumindest an seinem Außenumfang eine umlaufende Ringwandung hat, an welche Ringwandung die Gitter- oder Netzstruktur dieses Einsetzteiles einstückig angeformt ist. Dabei wird die Ringwandung eines jedes Einsetzteiles so bemessen, dass der Abstand der an diese Ringwände angeformten Gitter- oder Netzstrukturen festgelegt ist.

Eine besonders einfache und leicht herzustellende Ausführungsform gemäß der Erfindung sieht vor, dass das Dämpfergehäuse mit dem Strahlzerleger lösbar verbindbar oder einstückig verbunden ist.

Eine vorteilhafte Ausführungsform gemäß der Erfindung sieht vor, dass das Dämpfergehäuse in einer vorzugsweise zentralen Einsetzöffnung des Strahlzerlegers mittels einer Rastverbindung gehalten ist.

Um die Bestandteile eines Bewegungsdämpfers in einem ausreichend groß bemessenen Dämpfergehäuse unterbringen zu können, ist es vorteilhaft, wenn der Strahlzerleger sowie vorzugsweise auch der Strömungsgleichrichter und gegebenenfalls auch das zumindest eine, zwischen Strahlzerleger und Strömungsgleichrichter vorgesehene Einsetzteil jeweils eine Einsetzöffnung aufweisen, welche Einsetzöffnung(en) von dem Dämpfergehäuse durchsetzt ist (sind).

Eine bevorzugte Weiterbildung gemäß der Erfindung sieht vor, dass der Dämpferkolben während einer Schiebebewegung bei Gebrauch Öl oder dergleichen zähflüssiges Fluid von der Ruhestellung in die Offenposition durch zumindest einen Verbindungskanal und von der Offenposition in die Ruhestellung durch wenigstens einen Rückströmkanal verdrängt. Bei einer solchen Ausführungsform lässt sich die Druckstufe des Bewegungsdämpfers einerseits und dessen Zugstufe andererseits auf einfache Weise auch unterschiedlich ausgestalten.

Um ein vom Strahlzerleger lösbares Dämpfergehäuse in der Gebrauchsstellung des Einsetzteiles ausreichend fest am Strahlzerleger befestigen zu können, ist es vorteilhaft, wenn am Dämpfergehäuse außenumfangsseitig ein Einstetzanschlag vorgesehen ist und wenn das Dämpfergehäuse in die Einsetzöffnung im Strahlzerleger einsetzbar ist, bis der Einsteckanschlag an einem Gegenanschlag am Strahlzerleger anliegt.

Um das im Dämpfergehäuse befindliche Öl oder dergleichen zähflüssiges Fluid auf einfache Weise von der einen Seite des Dämpferkolbens zur anderen Seite des Dämpferkolbens verdrängen zu können, ist es zweckmäßig, wenn der Dämpferkolben an seinem Außenumfang wenigstens eine umfangsseitig offene Nut aufweist, die mit dem Gehäuseinnenumfang des Dämpfergehäuses den zumindest einen Rückströmkanal umgrenzt. Bei dieser Ausführungsform kann auf kleine und eventuell leicht verschmutzende Durchflussbohrungen beziehungsweise Rückströmkanäle im Dämpferkolben verzichtet werden.

Vorteilhaft ist es, wenn der wenigstens eine Verbindungskanal zuströmseitig einen Kanaleinlass hat, der an dem Gehäuseboden des Dämpfergehäuses zugewandten Kolbenstirnseite des Dämpferkolbens angeordnet ist.

Eine bevorzugte Ausführungsform gemäß der Erfindung sieht vor, dass der wenigstens eine Verbindungskanal abströmseitig einen Kanalabschnitt hat, der vorzugsweise in einer nutförmigen Einformung zwischen der Kolbenstange und einer Innenumfangswandung vorgesehen ist, welche Innenumfangswandung eine, das eine Stangenende der Kolbenstange in sich aufnehmende Einstecköffnung im Dämpferkolben umgrenzt.

Vorteilhaft ist es, wenn der Bewegungsdämpfer eine unter dem Druck des anströmenden Wassers wirksame Druckstufe, während der sich das Ventil von seiner Ruhestellung in die Offenstellung bewegt, und eine Zugstufe hat, während der eine Rückstellbewegung des Dämpferkolbens von der Offenstellung in die Ruhestellung des Ventils erfolgt.

Damit das austretende Wasservolumen bei Öffnen des Auslaufventils ausreichend langsam anschwillt, ist es vorteilhaft, wenn die Druckstufe des Bewegungsdämpfers härter als die Zugstufe ausgestaltet ist.

Dazu sieht eine bevorzugte Ausführung gemäß der Erfindung vor, dass auf der der Strömungsrichtung abgewandten Stirnseite des Dämpferkolbens eine Ringdichtung vorgesehen ist, welche während einer Schiebebewegung des Dämpferkolbens von der Ruhestellung in die Offenposition den zumindest einen Rückströmkanal verschließt. Auf diese Weise wird sichergestellt, dass während einer solchen Schiebebewegung das Fluid vom Dämpferkolben nur durch den wenigstens einen Verbindungskanal hindurch verdrängt werden kann und dass sich der Bewegungsdämpfer in dieser Druckstufe auf einfache Weise entsprechend ausgestalten lässt.

Um während der Schiebebewegung des Dämpferkolbens für den Anwender hörbare Störgeräusche zu verhindern, ist es vorteilhaft, wenn der Ventilkolben zumindest in der, in der Ruhestellung am Ventilsitz anliegenden Ringzone eine Oberflächenschicht aus elastischem Material trägt.

Um den Ventilkolben mit einer solchen Oberflächenschicht aus elastischem Material zu versehen, ist es vorteilhaft, wenn der Ventilkolben an seiner dem Ventilsitz zugewandten Stirnseite eine Oberflächenschicht aus elastischem Material trägt, die am Ventilkolben in radialer Richtung verschieblich montiert ist. Da bei dieser weiterbildenden Ausführungsform die Oberflächenschicht am Ventilkolben in radialer Richtung verschieblich montiert ist, wird die aus elastischem, aber inkompressiblem Material bestehende Oberflächenschicht durch den Druck des anströmenden Wassers derart zusammengedrückt und in radialer Richtung nach außen zum Ventilsitz hin verdrängt, dass auch kurzzeitig hörbaren Störgeräuschen während der Schiebebewegung des Ventilkolbens von der Ruheposition in die Offenstellung entgegengewirkt wird.

Dabei kann die Oberflächenschicht ringscheibenförmig ausgestaltet sein, wobei die Ringscheibenöffnung dieser Oberflächenschicht von einem am Ventilkolben vorstehenden Zapfen durchsetzt ist.

Demgegenüber ist es aber auch möglich und vorteilhaft, wenn an die dem Ventilkolben zugewandte Flachseite der Oberflächenschicht wenigstens ein Steckzapfen angeformt ist, welcher Steckzapfen in einer zugeordneten Zapfenöffnung des Ventilkolbens gehalten ist.

Da eine solche elastische Oberflächenschicht in dem engen Bereich zwischen Ventilkolben, Oberflächenschicht, Ventilsitz sowie einem gegebenenfalls noch vorgeschalteten Vorsatz- oder Filtersieb zu einer übermäßigen und funktionsbeeinträchtigenden Abdichtung des Einsetzteiles führen kann, ist es zweckmäßig, wenn der als Ventilsitz ausgebildete Umfangsrand im Einsetzgehäuse zumindest eine randseitige Einformung hat, welche Einformung auch in der Ruhestellung des Ventils wasserdurchlässig ist.

Um hörbare Störgeräusche während der Schiebebewegung des Ventilkolbens zu verhindern, kann es zusätzlich oder stattdessen vorteilhaft sein, wenn der Ventilkolben an seinem dem Ventilsitz zugewandten Umfangsrand eine Fase trägt oder einen gerundeten Kolbenrand hat. Dieser gerundete Kolbenrand oder die Fase kann unmittelbar am Ventilkolben oder seiner von ihm getragenen Oberflächenschicht ausgebildet sein.

Der Ventilkolben und seine elastische Oberflächenschicht können gegebenenfalls auch als Mehrkomponenten-Spritzgussteil hergestellt werden. Eine einfache und mit vergleichsweise geringem Herstellungsaufwand verbundene Ausführung gemäß der Erfindung sieht jedoch demgegenüber vor, dass der Ventilkolben und die elastische Oberflächenschicht als separate Bauteile hergestellt sind, die erst nach ihrer Herstellung aneinander montiert werden. Damit in montiertem Zustand die elastische Oberflächenschicht sicher und fest am Ventilkolben gehalten ist, sieht eine bevorzugte Ausführungsform gemäß der Erfindung vor, dass die Oberflächenschicht mit ihrem Umfangsrandbereich den Ventilkolben und insbesondere einen flanschartig überstehenden Teilbereich des Ventilkolbens hintergreift.

Um den Ventilkolben während seiner Stell- oder Schiebebewegung mit möglichst geringem Reibungswiderstand zu führen und um unerwünschte Quietschgeräusche während der Schiebe- oder Stellbewegung des Ventilkolbens zu vermeiden, ist es vorteilhaft, wenn auf der Abströmseite des Ventilsitzes Führungsrippen vorgesehen sind, die während der Schiebebewegung des Ventilkolbens jeweils eine linienförmige Kolbenführung für den Ventilkolben bilden.

Um dabei den Ventilkolben besonders gut führen zu können, ohne den Schiebewiderstand zu erhöhen, ist es vorteilhaft, wenn die Oberflächenschicht einen umfangsseitig überstehenden Ringflansch aufweist, und wenn die Führungsrippen diesen Ringflansch der Oberflächenschicht beaufschlagen.

Eine erfindungsgemäße Verwendung der oben beschriebenen sanitären Einsetzeinheit sieht vor, dass die sanitäre Einsetzeinheit in einem Eck- oder Anschlussventil einer sanitären Wasserleitung zwischengeschaltet ist.

Demgegenüber sieht aber eine bevorzugte weitere erfindungsgemäße Verwendung der oben beschriebenen sanitären Einsetzeinheit vor, dass die sanitäre Einsetzeinheit im Wasserauslauf einer sanitären Auslaufarmatur montiert ist. Eine solche Einsetzeinheit lässt sich auch nachträglich noch gegen einen handelsüblichen Strahlregler austauschen, in dem statt dieses handelsüblichen Strahlreglers nun die erfindungsgemäße Einsetzeinheit in das Auslaufmundstück eingesetzt wird, welches Auslaufmundstück anschließend mit einem Innen- oder Außengewinde an einem komplementären Gegengewinde am Wasserauslauf der sanitären Auslaufarmatur montiert werden kann. Weiterbildungen gemäß der Erfindung ergeben sich aus den Ansprüchen in Verbindung mit der Beschreibung sowie den Zeichnungen. Nachstehend wird die Erfindung anhand bevorzugter Ausführungsbeispiele noch näher beschrieben. Es zeigt:
- Fig. 1: eine als Strahlbelüfter ausgebildete und hier in einem Längsschnitt gezeigte Einsetzeinheit mit einem Einsetzgehäuse, in welchem Einsetzgehäuse ein Ventil vorgesehen ist, das einen im Einsetzgehäuse verschieblich geführten Ventilkolben hat, wobei die Schiebebewegung des Ventilkolbens von der hier gezeigten Ruhestellung des Ventils in eine Offenstellung mit Hilfe eines Bewegungsdämpfer abgebremst oder gedämpft ist,
- Fig. 2: die hier ebenfalls in einem Längsschnitt gezeigte Einsetzeinheit in einer Zwischenstellung zwischen der Ruhestellung und einer Offenstellung des Ventils,
- Fig. 3: die hier ebenfalls längsgeschnittene Einsetzeinheit in der Offenstellung des im Einsetzgehäuse befindlichen Ventils,
- Fig. 4: die Einsetzeinheit aus den Figuren 1 bis 3 in einer auseinandergezogenen Perspektivdarstellung ihrer Bestandteile,
- Fig. 5: eine hier ebenfalls als Strahlbeflüfter ausgebildete und am Wasserauslauf einer sanitären Auslaufarmatur montierbare Einsetzeinheit in einem Längsschnitt, wobei sich das im Einsetzgehäuse diese Einsetzeinheit vorgesehene Ventil in seiner Ruhestellung befindet und wobei im Einsetzgehäuse dieser Einsetzeinheit ein Durchflussmengenregler zwischengeschaltet ist, der das pro Zeiteinheit durchströmende Wasservolumen druckunabhängig auf einen festgelegten Maximalwert einregelt und begrenzt,
- Fig. 6: die bereits in Figur 5 gezeigte Einsetzeinheit in einem Längsschnitt, wobei sich die Einsetzeinheit hier in der Offenstellung des Ventils befindet,
- Fig. 7: die Einsetzeinheit aus den Figuren 5 und 6 in einer auseinandergezogenen Perspektivdarstellung ihrer Bestandteile,
- Fig. 8: eine hier ebenfalls als Strahlbelüfter ausgebildete und in einem Längsschnitt gezeigte Einsetzeinheit, welche Einsetzeinheit in ihrem Einsetzgehäuse ein Ventil mit einem Ventilkolben hat, der auf seiner einem Ventilsitz zugewandten Flachseite eine hier ringförmig ausgebildete Oberflächenschicht aus elastischem Material trägt, wobei das Ventil hier in seiner Ruheposition gezeigt ist,
- Fig. 9: die Einsetzeinheit aus Figur 8 in einer längsgeschnittenen Detaildarstellung im Bereich des in der Ruhestellung am Ventilsitz anliegenden Ventilkolbens,
- Fig. 10: die ebenfalls längsgeschnittene Einsetzeinheit aus Figur 8 und 9, wobei sich das Ventil hier in der Offenposition befindet,
- Fig. 11: die Einsetzeinheit aus den Figuren 8 bis 10 in einer auseinandergezogenen Perspektivdarstellung ihrer Bestandteile,
- Fig. 12: eine im Längsschnitt gezeigte und als Strahlbelüfter ausgestaltete Einsetzeinheit in der Ruhestellung des Ventils, wobei der tellerförmige Ventilkolben an seinem in Ruhestellung am Ventilsitz anliegenden Tellerrand eine Rundung oder eine Fase trägt, die hörbaren Störgeräuschen während der Schiebebewegung des Ventilkolbens entgegenwirken soll,
- Fig. 13: die Einsetzeinheit aus Figur 12 in einem Längsschnitt in der Offenposition des Ventils,
- Fig. 14: die Einsetzeinheit aus den Figuren 12 und 13 in einer auseinandergezogenen Perspektivdarstellung ihrer Bestandteile,
- Fig. 15: einen in den Strahlbelüftern gemäß den Figuren 1 bis 14 in zumindest ähnlicher Bauweise verwendeten Bewegungsdämpfer, der eine Rückstellfeder als Rückstellelement aufweist,
- Fig. 16: die aus Bewegungsdämpfer und Rückstellfeder entstehende Einheit aus Figur 15 in einer auseinandergezogenen Perspektivdarstellung ihrer Bestandteile,
- Fig. 17a: einen längsgeschnittenen Strahlzerleger für einen ansonsten hier nicht weiter gezeigten Strahlbelüfter, wobei der hier gezeigte Strahlzerleger mit dem Dämpfergehäuse eines Bewegungsdämpfers einstückig verbunden ist,
- Fig. 17b: die aus dem Strahlzerleger sowie dem einstückig angeformten Dämpfergehäuse des Bewegungsdämpfers und dessen Bestandteilen bestehende Einheit aus Figur 17a in einer auseinandergezogenen Einzelteildarstellung,
- Fig. 18a: einen längsgeschnittenen Strahlzerleger für einen ansonsten hier nicht weiter gezeigten Strahlbelüfter, wobei der hier gezeigte Strahlzerleger eine zentrale Einsetzöffnung hat, in die das Dämpfergehäuse eines Bewegungsdämpfers eingesetzt und mittels einer Rastoder Schnappverbindung sicher gehalten ist,
- Fig. 18b: die aus dem Strahlzerleger, getrennten Dämpfergehäuse eines Bewegungsdämpfers und den weiteren Bestandteilen des Bewegungsdämpfers bestehende Einheit aus Figur 18a in einer auseinandergezogenen Einzelteildarstellung,
- Fig. 19: eine oberhalb eines Waschbeckens vorstehende Auslaufarmatur, bei der das austretende Wasser nach dem Öffnen des Auslaufventils in einem langsam anschwellenden Wasserstrom austritt,
- Fig. 20: eines der zur Auslaufarmatur gemäß Figur 19 führenden Eck- oder Anschlussventile, in welchem Eck- oder Anschlussventil ebenfalls eine Einsetzeinheit integriert ist,
- Fig. 21: die in das Eck- oder Anschlussventil gemäß Figur 20 montierte Einsetzeinheit in einem Längsschnitt in der Ruhestellung ihres Ventils,
- Fig. 22: die Einsetzeinheit aus Figur 21 in einer Zwischenstellung des Ventils,
- Fig. 23: die Einsetzeinheit aus Figur 21 und 22 in der Offenstellung des Ventils,
- Fig. 24: die Einsetzeinheit aus den Figuren 21 bis 23 in einer auseinandergezogenen Perspektivdarstellung ihrer Einzelteile,
- Fig. 25: eine ebenfalls als Strahlbelüfter ausgebildete und in einem Längsschnitt gezeigte Einsetzeinheit in einer bevorzugten, weil vereinfachten Ausführungsform in der Ruhestellung des im Einsetzgehäuse vorgesehenen Ventils,
- Fig. 26: die hier ebenfalls längsgeschnittene Einsetzeinheit aus Figur 25 in der Offenstellung des im Einsetzgehäuse befindlichen Ventils,
- Fig. 27: die Einsetzeinheit aus den Figuren 25 und 26 in einer auseinandergezogenen Perspektivdarstellung ihrer Bestandteile in Draufsicht auf die Zuströmseite der Einsetzeinheit,
- Fig. 28: die Einsetzeinheit aus den Figuren 25 bis 27 in einer Perspektivdarstellung ihrer Bestandteile in einer Unteransicht auf die Abströmseite dieser Einsetzeinheit,
- Fig. 29: eine beispielsweise gegenüber der Einsetzeinheit gemäß den Figuren 8 bis 11 geänderte Ausführung einer Einsetzeinheit in der Ruhe- oder Schließposition des im Einsetzgehäuse dieser Einsetzeinheit vorgesehenen Ventils,
- Fig. 30: die Einsetzeinheit aus Figur 29 in der Offenposition des Ventils, und
- Fig. 31: den Ventilsitz des in der Einsetzeinheit gemäß den Figuren 29 und 30 vorgesehenen Ventils in einer Draufsicht auf die Abströmseite des Ventilsitzes.

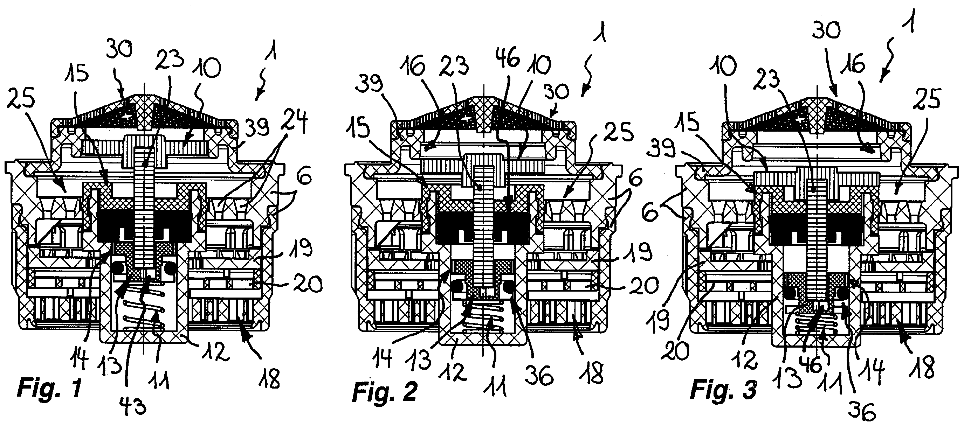

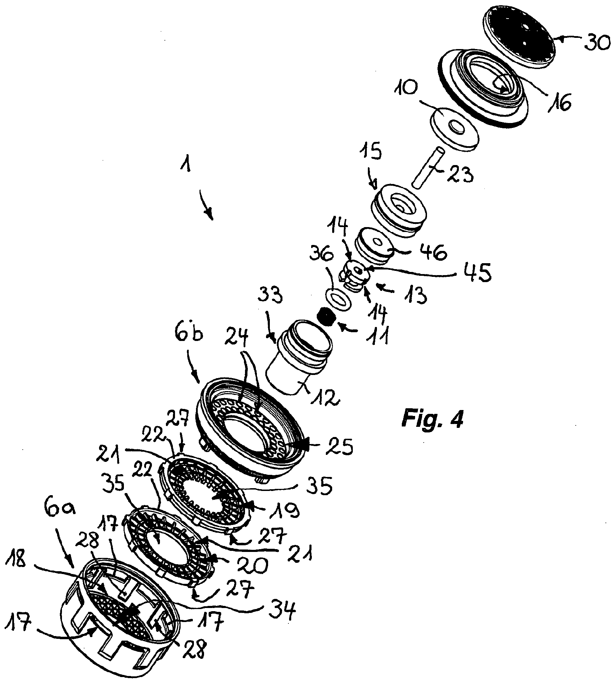

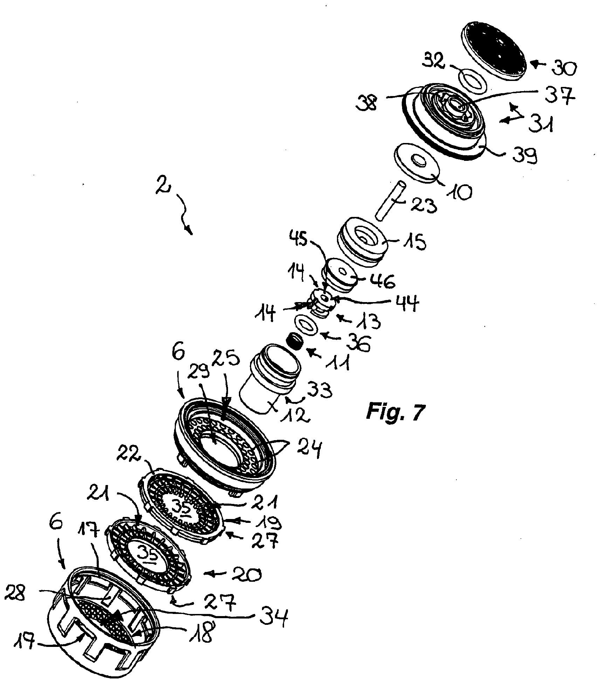

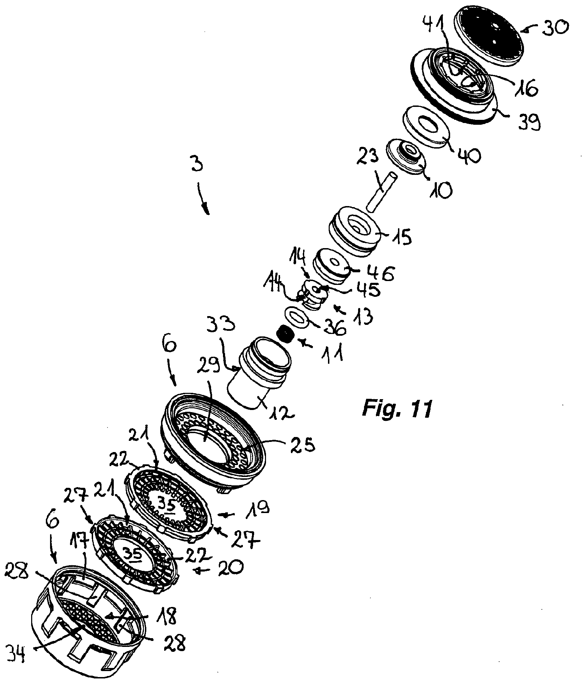

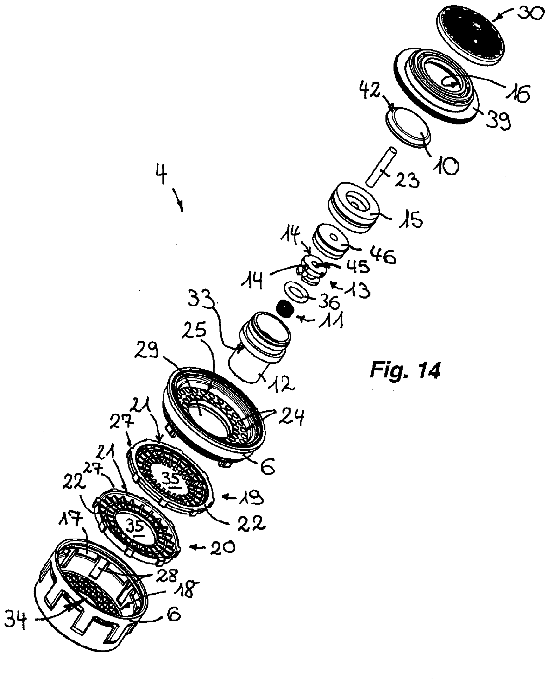

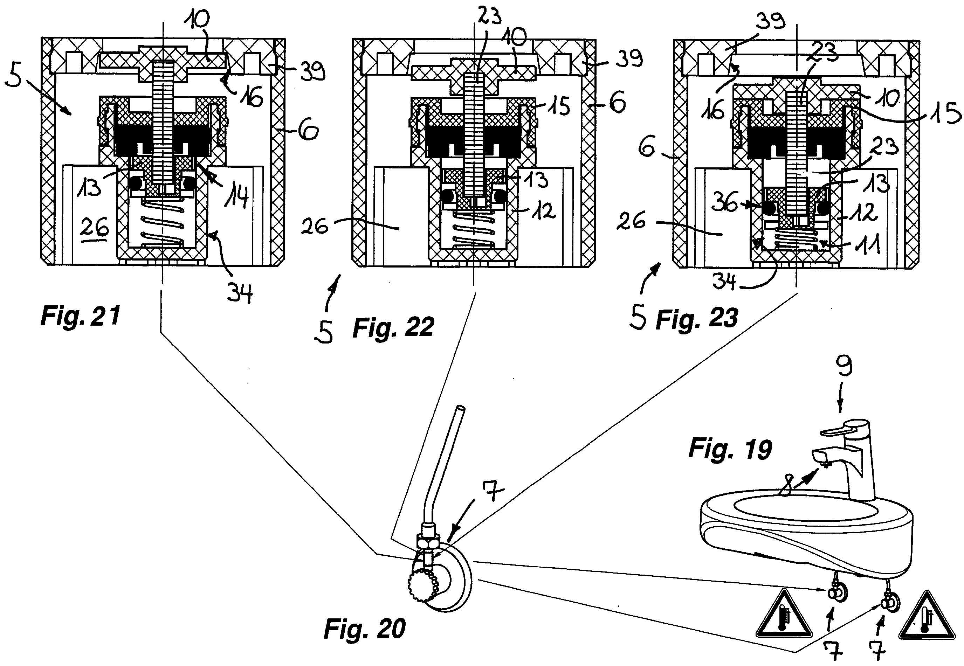

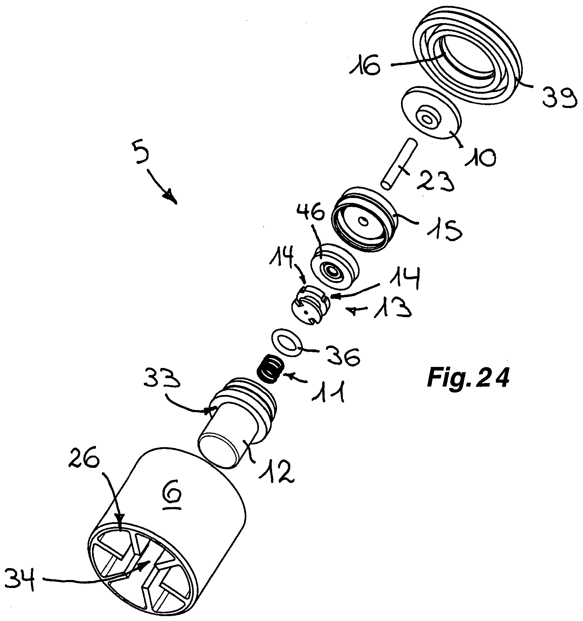

In den Figuren 1 bis 14 und 21 bis 30 ist eine sanitäre Einsetzeinheit in verschiedenen Ausführungen 1, 2, 3, 4, 5, 50 und 60 dargestellt. Die Einsetzeinheit 1, 2, 3, 4, 5, 50, 60 weist ein Einsetzgehäuse 6 auf, das hier zweiteilig ausgebildet ist und ein abströmseitiges Gehäuseteil 6a sowie ein zuströmseitiges Gehäuseteil 6b (vgl. Fig. 4) hat. Das Einsetzgehäuse 6 ist im Wasserauslauf 8 einer sanitären Auslaufarmatur 9 montiert (Einsetzeinheiten gemäß den Fig. 1 bis 14 und 25 bis 30) oder zwischen zwei Leitungsabschnitten einer Wasserleitung, beispielsweise in einem Eck- oder Anschlussventil 7 (Einsetzeinheit gemäß den Fig. 21 bis 24) eingesetzt. Dabei soll die Einsetzeinheit 1, 2, 3, 4, 5, 50, 60 auch bei einem schlagartigen Öffnen eines in der Wasserleitung vorgesehenen Auslaufventils einen sanft anschwellenden Wasserstrom erzeugen. Im Einsetzgehäuse 6 der Einsetzeinheiten 1, 2, 3, 4, 5, 50, 60 ist dazu ein Ventil mit einem Ventilkolben 10 vorgesehen, der von einer Ruhestellung unter dem Druck des gegen die Einsetzeinheiten 1, 2, 3, 4, 5, 50, 60 und deren Ventilkolben 10 anströmenden Wassers gegen die Rückstellkraft wenigstens eines Rückstellelements bewegbar ist. Dabei kann die Ruhestellung als Schließstellung des Ventils ausgestaltet oder als eine Durchflussposition ausgebildet sein, die gegenüber der Offenstellung einen reduzierten Durchflussquerschnitt bietet.

Die Rückstelleinheit, die im Einsetzgehäuse 6 angeordnet ist und zumindest in der Offenstellung von dem durch das Einsetzgehäuse 6 durchfließenden Wasser umspült wird, weist über das mindestens eine Rückstellelement hinaus auch wenigstens einen Bewegungsdämpfer auf, welcher Bewegungsdämpfer die Bewegung des Ventilkolbens 10 von der Ruhestellung in die Offenposition derart dämpft oder bremst, dass der Ventilkolben 10 den Durchfluss des Wassers im Bereich der Einsetzeinheiten 1, 2, 3, 4, 5, 50, 60 nur langsam öffnet und der Wasserstrom selbst bei schlagartig geöffnetem Auslaufventil dementsprechend nur langsam anschwillt.

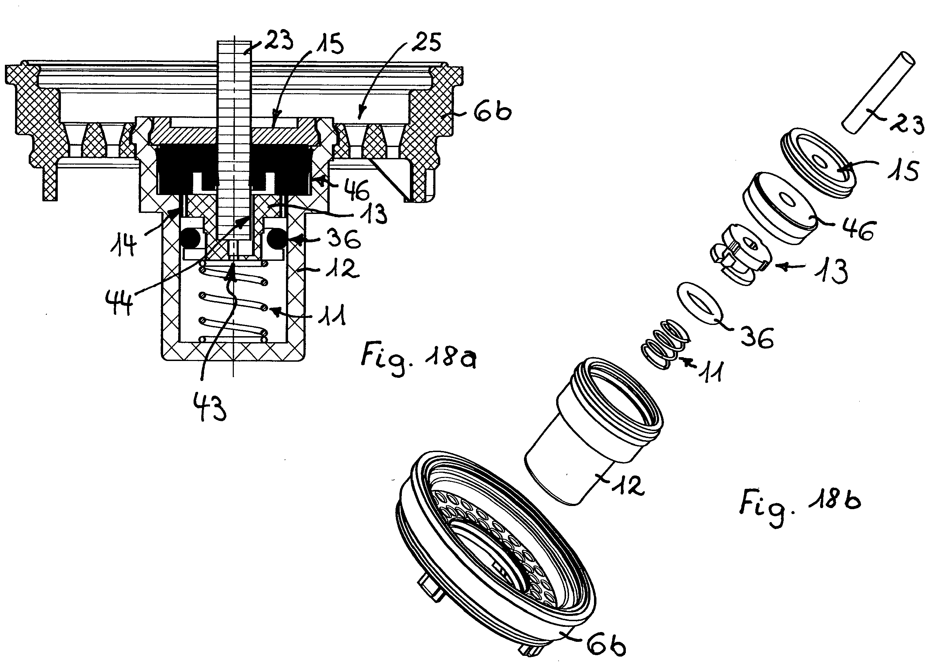

Die in den Figuren 1 bis 14 und 21 bis 30 gezeigten Ausführungsbeispiele 1, 2, 3, 4, 5, 50, 60 haben als Rückstellelement eine Druckfeder 11, die in einem Dämpfergehäuse 12 des Bewegungsdämpfers angeordnet ist. In dem hier hülsenförmig ausgebildeten Dämpfergehäuse 12 ist ein Dämpferkolben 13 verschieblich geführt. Während seiner Schiebebewegungen im Dämpfergehäuse 12 verdrängt der Dämpferkolben 13 ein zähflüssiges Fluid, vorzugsweise ein Öl und insbesondere ein trinkwassertaugliches Silikonöl, von der einen Seite des Dämpferkolbens 13 auf die jeweils andere Seite des Dämpferkolbens 13. Während der Dämpferkolben 13 das Fluid während einer Schiebebewegung von der Ruhestellung in die Offenposition durch zumindest einen Verbindungskanal 43 verdrängt, fließt dieses Fluid demgegenüber bei einer Schiebebewegung des Dämpferkolbens 13 von der Offenposition in die Ruhestellung durch wenigstens einen Rückströmkanal. Der Verbindungskanal 43 hat zuströmseitig einen Kanaleinlass, der an der dem Gehäuseboden des Dämpfergehäuses 12 zugewandten Kolbenstirnseite des Dämpferkolbens 13 angeordnet ist. Der Verbindungskanal 43 hat abströmseitig einen Kanalabschnitt, der in einer nutförmigen Einformung 44 zwischen der Kolbenstange 23 und einer Innenumfangswandung vorgesehen ist, welche Innenumfangswandung eine, das eine Stangenende der Kolbenstange 23 in sich aufnehmende Einstecköffnung 45 im Dämpferkolben 13 umgrenzt. diese nutförmige Einformung 44 ist - wie beispielsweise in Figur 18b angedeutet ist - hier im Dämpferkolben 13 vorgesehen.

Der Dämpferkolben 13 weist an seinem Außenumfang wenigstens eine umfangsseitig offene Nut 14 auf, die mit dem Gehäuseinnenumfang des Dämpfergehäuses 12 den zumindest einen Rückströmkanal umgrenzt. Auf der der Durchströmrichtung der Einsetzeinheit 1, 2, 3, 4, 5, 50, 60 abgewandten Stirnseite des Dämpferkolbens 13 ist eine Ringdichtung 36 vorgesehen, welche Ringdichtung 36 während einer Schiebebewegung des Dämpferkolbens 13 von der Ruhestellung in die Offenposition den zumindest einen Rückströmkanal verschließt.

Der Ventilkolben 10 steht mit dem Dämpferkolben 13 über eine Kolbenstange 23 in Bewegungsverbindung. Diese Kolbenstange 23 ist an ihrem entgegen der Strömungsrichtung orientierten ersten Stangenende mit dem Ventilkolben 10 und an ihrem, in die Strömungsrichtung weisenden zweiten Stangenende mit dem Dämpferkolben 13 verbunden. Die als Rückstellelement dienende Druckfeder 11 druckbeaufschlagt die der Durchströmrichtung der Einsetzeinheiten 1, 2, 3, 4, 5, 50, 60 abgewandte Stirnseite des Dämpferkolbens 13 und ist zwischen dieser Stirnseite und dem geschlossenen Gehäuseboden des hier hülsenförmigen Dämpfergehäuses 12 angeordnet. Auf der dem Gehäuseboden abgewandten Stirnseite weist das Dämpfergehäuse 12 eine zuströmseitige Gehäuseöffnung auf, die mittels einer Abdeckung 15 verschlossen ist. Die Abdeckung 15 ist ringscheibenförmig ausgebildet und weist eine Ringscheibenöffnung auf, welche die Kolbenstange 14 durchsetzt. Das Dämpfergehäuse 12 ist gegenüber dem Einsetzgehäuse 6 mittels eines ringscheibenförmigen Stopfens abgedichtet, dessen Ringscheibenöffnung ebenfalls von der Kolbenstange 23 durchsetzt wird. Dieser Stopfen 46 ist in das Dämpfergehäuse 12 eingelegt und am Gehäuseinnenumfang des Dämpfergehäuses 12 lösbar gehalten. Der Stopfen 46 wird im Dämpfergehäuse 12 mittels der ringscheibenförmigen Abdeckung 15 gesichert. Dabei dichtet der Stopfen 46 zwischen dem Gehäuseinnenumfang des Dämpfergehäuses 12 und der dessen Ringscheibenöffnung durchsetzenden Kolbenstange 23 ab, so dass das im Dämpfergehäuse 12 befindliche zähflüssige Fluid nicht unbeabsichtigt austreten und vom durchfließenden Wasserstrom mitgerissen werden kann.

Die Abdeckung 15 ist hier kappenförmig ausgebildet und umschließt mit einer randseitigen Stulpzone den die stirnseitige Öffnung umgrenzenden Wandungsumfang der Gehäusewandung des Dämpfergehäuses 12.

In der in den Figuren 1, 5, 8, 9, 12, 21, 25 und 29 gezeigten Ruhestellung der hier dargestellten Ausführungsbeispiele 1, 2, 3, 4, 5, 50, 60 der Einsetzeinheiten liegt der Ventilkolben 10 des Ventils in der Ruhestellung an einem Umfangsrand im Einsetzgehäuse 6 an. Demgegenüber ist der Ventilkolben 10 der in den Figuren 3, 6, 10, 13, 23, 26, 30 gezeigten Offenstellung von diesem als Ventilsitz 16 ausgebildeten Umfangsrand im Einsetzgehäuse 6 beabstandet.

Aus Figur 19 und einem Vergleich der in den Figuren 1 bis 14 und 25 bis 30 gezeigten Ausführungsbeispiele 1, 2, 3, 4, 50, 60 einerseits sowie des in den Figuren 21 bis 24 dargestellten Ausführungsbeispieles 5 andererseits wird deutlich, dass die Einsetzeinheit - je nach Ausführung - beispielsweise im Wasserauslauf 8 einer sanitären Auslaufarmatur 9 montiert oder aber zwischen zwei Leitungsabschnitten einer Wasserleitung, beispielsweise in einem Eck- oder Anschlussventil 7, zwischengeschaltet sein kann.

Die in den Figuren 1 bis 14 und 25 bis 30 abgebildeten Ausführungsbeispiele 1, 2, 3, 4, 50, 60 zeigen eine Einsetzeinheit, die im Wasserauslauf 8 der sanitären Auslaufarmatur 9 (vgl. Fig. 19) mit Hilfe eines Auslaufmundstücks montiert ist. Dabei kann die Einsetzeinheit 1, 2, 3, 4, 50, 60 als unbelüfteter Strahlformer ausgebildet sein, der das abströmende Wasser zu einem homogenen und nicht-spritzenden Wasserstrahl formt. Die hier demgegenüber als Strahlbelüfter ausgebildete Einsetzeinheit 1, 2, 3, 4, 50, 60 gemäß den Figuren 1 bis 14 und 25 bis 30 soll das austretende Wasser noch zusätzlich mit Umgebungsluft durchmischen und zu einem perlend-weichen Wasserstrahl formen.

Im Einsetzgehäuse 6 der in den Figuren 1 bis 14 und 25 bis 30 gezeigten Einsetzeinheiten 1, 2, 3, 4, 50, 60 ist dazu ein Strahlzerleger 25 vorgesehen, der eine Vielzahl von, auf konzentrischen Lochkreisen angeordneter Durchflusslöcher 24 hat, die das durchströmende Wasser in eine entsprechende Anzahl von Einzelstrahlen aufteilen. Da die Durchflusslöcher 24 den Durchflussquerschnitt verengen, wird die Durchströmgeschwindigkeit des Wassers im Bereich dieser Durchflusslöcher 24 derart erhöht, dass auf der Abströmseite des Strahlzerlegers 25 ein Unterdruck entsteht, mittels dem Umgebungsluft in das Gehäuseinnere des Einsetzgehäuses 6 eingesaugt wird. In der Umfangswandung des Einsetzgehäuses 6 ist dazu zumindest eine Belüftungsöffnung 17 vorgesehen, die in einer in Strömungsrichtung vorzugsweise unmittelbar unterhalb dem Strahlzerleger 25 angeordneten Ringzone in der Gehäuseumfangswandung des Einsetzgehäuses 6 vorgesehen ist. Die zumindest eine Belüftungsöffnung 17 mündet in einer, im Gehäuseinneren des Einsetzgehäuses 6 befindlichen Mischzone, die sich auf der Abströmseite des Strahlzerlegers 25 an diesen anschließt.

Die in den Figuren 1 bis 14 und 25 bis 30 gezeigten Strahlbelüfter 1, 2, 3, 4, 5, 50 und 60 weisen an der abströmseitigen Stirnseite ihres Einsetzgehäuses 6 einen Strömungsgleichrichter 18, 26 auf, der eine hier an das Einsetzgehäuse 6 einstückig angeformte Waben-, Gitter- oder Netzstruktur aufweist. Der als Wabenstruktur ausgebildete Strömungsgleichrichter 18 der Einsetzeinheiten 1, 2, 3, 4, 50, 60 weist Stege auf, die sich an Kreuzungsknoten kreuzen und zwischen sich etwa wabenzellenförmige oder sechseckige Durchflussöffnungen umgrenzen. Der Strömungsgleichrichter 18 soll die im Gehäuseinneren verwirbelten und mit Umgebungsluft vermischten Einzelstrahlen wieder zu einem homogenen Auslaufstrahl formen. Die Stege der Waben-, Gitter- oder Netzstruktur weisen daher eine strömungsführende Längserstreckung auf, die im Vergleich zum größten lichten Durchmesser dieser Durchflusslöcher des Strömungsgleichrichters 18 größer sein kann.

Zwischen dem Strahlzerleger 25 und dem Strömungsgleichrichter 18 ist zumindest ein Einsetzteil 19, 20 und vorzugsweise zwei oder auch mehr als zwei Einsetzteile 19, 20 eingelegt. Diese Einsetzteile 19, 20 weisen jeweils ebenfalls eine Gitter- oder Netzstruktur mit aus einander an Kreuzungsknoten kreuzenden Stegen auf, die zwischen sich ebenfalls Durchflussöffnungen 21 umgrenzen. Diese Einsetzteile sollen die im Strahlzerleger 25 erzeugten Einzelstrahlen noch zusätzlich aufteilen und die Durchmischung mit Umgebungsluft begünstigen. Jedes der Einsetzteile 19, 20 weist an seinem Außenumfang eine Ringwand 22 auf, die mit den Stegen der Gitter- oder Netzstruktur dieser Einsetzteile 19, 20 einstückig verbunden ist. Die übereinander gestapelten Ringwände 22 der einander benachbarten Einsetzteile 19, 20 liegen aufeinander auf und sind so bemessen, dass die Gitter- oder Netzstruktur in einem definierten Abstand zueinander angeordnet sind. Die Einsetzteile 19, 20 sind drehgesichert im Einsetzgehäuse 6 gehalten, wobei die Stege eines abströmseitigen Einsetzteiles 20 mit den Durchflussöffnungen 21 des dazu benachbarten zuströmseitigen Einsetzteiles 19 fluchten sollten.

Zur Drehsicherung der Einsetzteile 19, 20 weisen diese am Außenumfang ihrer Ringwände 22 wenigstens einen Sicherungsvorsprung 27 oder mindestens eine Sicherungseinsenkung auf, welches Sicherungsmittel 27 mit einer komplementären Gegeneinsenkung 28 oder einem Gegenvorsprung am Gehäuseinnenumfang des Einsetzgehäuses 6 zusammenwirkt. Bei den hier gezeigten und als Strahlbelüfter ausgebildeten Einsetzeinheiten 1, 2, 3, 4, 50, 60 ist das Dämpfergehäuse 12 mit dem Strahlzerleger 25 lösbar verbindbar. Der Strahlzerleger 25 weist dazu eine zentrale Einsetzöffnung 29 auf. Das Dämpfergehäuse 12 hat außenumfangsseitig einen umlaufenden und hier als Ringabsatz ausgebildeten Einsetzanschlag 33. Dabei ist das Dämpfergehäuse 12 von der Zuströmseite aus in die Einsetzöffnung 29 einsetzbar, bis der Einsetzanschlag 33 an einem Gegenanschlag am Strahlzerleger 25 anliegt. Dieser Gegenanschlag wird hier durch den die Einsetzöffnung 29 umgrenzenden Umfangsrand des Strahlzerlegers 25 gebildet. Das Dämpfergehäuse 12 ist in der Einsetzöffnung 29 des Strahlzerlegers 25 mittels einer Schnapp- oder Rastverbindung gehalten.

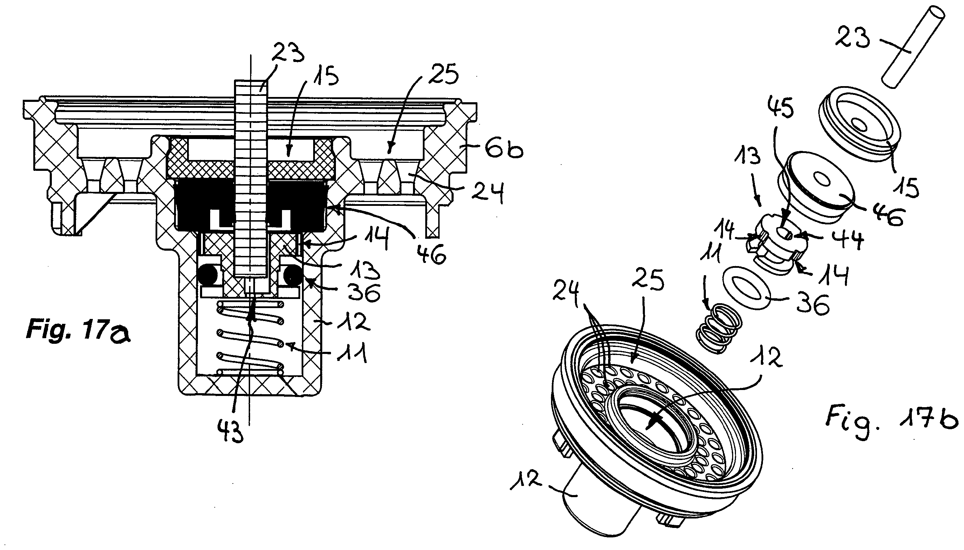

In den Figuren 17a und 17b ist gezeigt, dass das Dämpfergehäuse 12 aber auch einstückig mit dem Strahlzerleger 25 verbunden sein kann. Aus einem Vergleich der Figuren 17a und 17b einerseits sowie der Figuren 18a und 18b andererseits ist erkennbar, dass das Dämpfergehäuse 12 auch getrennt vom Strahlzerleger 25 hergestellt und in die Einsetzöffnung 29 des Strahlzerlegers 25 eingesetzt werden kann.

Das Dämpfergehäuse 12 steht über die Abströmseite des Strahlzerlegers 25 vor. Dazu sind auch in den ringförmigen Einsetzteilen 19, 20 und gegebenenfalls auch im Strömungsgleichrichter zentrale Einsetzöffnungen 27, 28 vorgesehen, welche das Dämpfergehäuse 12 durchsetzt.

Der Bewegungsdämpfer hat hier eine unter dem Druck des anströmenden Wassers wirksame Druckstufe, während der sich das Ventil von seiner Ruhestellung in die Offenstellung bewegt, und eine Zugstufe, während der eine Rückstellbewegung des Dämpferkolbens 13 von der Offenstellung in die Ruhestellung des Ventils erfolgt. Um den Wasserstrom nach dem Öffnen eines der Einsetzeinheit 1, 2, 3, 4, 5, 50, 60 vor- oder nachgeschalteten Auslaufventils ausreichend langsam anschwellen zu lassen, ist die Druckstufe des Bewegungsdämpfers härter als die Zugstufe ausgestaltet. Auf der der Strömungsrichtung abgewandten Stirnseite des Dämpferkolbens 13 ist dazu eine Ringdichtung 36 vorgesehen, welche sich während der Druckstufe des Bewegungsdämpfers derart an diese Stirnseite anlegt, dass die Ringdichtung 36 die Rückströmkanäle verschließt und das zähflüssige Fluid nur durch den zentral im Dämpferkolben 13 vorgesehenen Verbindungskanal hindurchfließen kann. Da somit der Durchflussquerschnitt für das Fluid während der Druckstufe reduziert ist, ist dieser Durchfluss des Fluids durch den zumindest einen Verbindungskanal im Vergleich zur Zugstufe erschwert.

Die in den Figuren 1 bis 4 gezeigte Einsetzeinheit 1 ist als Strahlbelüfter ausgebildet. Während die als Strahlbelüfter ausgestaltete Einsetzeinheit 1 in Figur 1 in der Ruhestellung und in Figur 3 in der Offenstellung ihres Ventils dargestellt ist, zeigt Figur 2 diese Einsetzeinheit 1 in einer Zwischenstellung kurz nach dem Öffnen der Auslaufarmatur 9 und des darin vorgesehenen Auslaufventils.

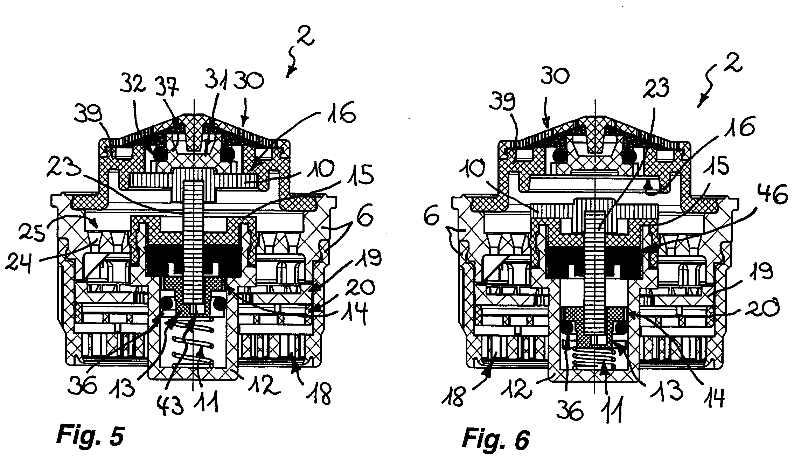

Die in den Figuren 1 bis 14 und 25 bis 30 dargestellten Einsetzeinheiten 1, 2, 3, 4, 5, 50, 60 weisen auf ihrer zuströmseitigen Stirnseite jeweils ein Vorsatz- oder Filtersieb 30 auf. Bei der in den Figuren 5 bis 7 gezeigten Einsetzeinheit 1 ist zwischen dem Vorsatz- oder Filtersieb 30 und dem Strahlzerleger 25 ein Durchflussmengenregler 31 zwischengeschaltet. Der im Einsetzgehäuse 2 des Einsetzteiles 2 vorgesehene Durchflussmengenregler 31 weist einen elastischen Drosselkörper 32 auf, der zwischen sich und zumindest einer Regelprofilierung einen Steuerspalt begrenzt, welcher Steuerspalt unter dem Druck des durchströmenden Mediums den lichten Durchflussquerschnitt verändert, derart, dass der hier gezeigte Durchflussmengenregler 31 das pro Zeiteinheit durchströmende Wasservolumen auf einen festgelegten Maximalwert einregelt und begrenzt. Dabei kann die Regelprofilierung entweder am Außenumfang eines vom Drosselkörper 32 umgriffenen zentralen Regelkerns 37 und/oder an einer, den Drosselkörper 32 umhüllenden Umfangswandung 38 vorgesehen sein.

Bei den in den Figuren 1 bis 14 und 29 bis 30 gezeigten Einsetzeinheiten 1, 2, 3, 4, 60 ist das Vorsatz- oder Filtersieb 30 über ein hülsen- oder ringförmiges Zwischenstück 39 mit dem Einsetzgehäuse 6 lösbar verrastbar oder dergleichen lösbar verbunden. Das an der Zuströmseite des Einsetzgehäuses 6 vorgesehene Zwischenstück 39 weist die als Ventilsitz 16 dienende Durchflussöffnung auf. Sofern diese Durchflussöffnung eine Querschnittsverengung des lichten Leitungsquerschnitts darstellt, kann die im Zwischenstück 39 vorgesehene Durchflussöffnung auch als Drossel wirken.

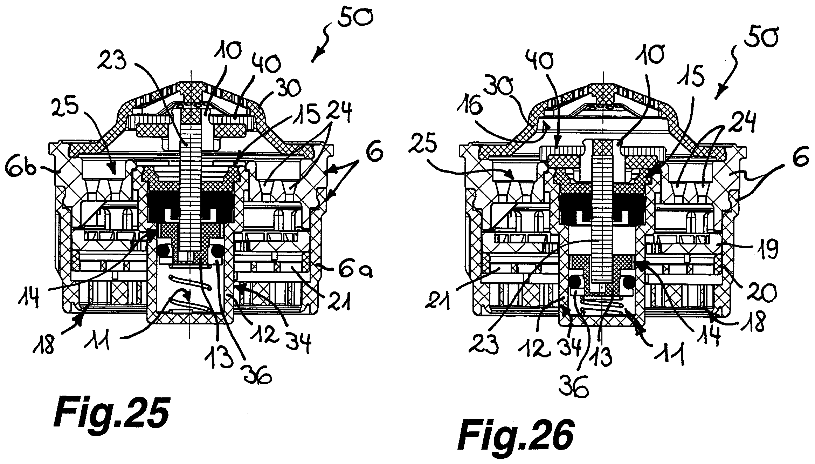

Bei der in den Figuren 25 bis 28 gezeigten Einsetzeinheit 50 ist das Vorsatz- oder Filtersieb 30 unmittelbar an der Zuströmseite des Einsetzgehäuses 6 mit diesem lösbar verbunden. Das Einsetzgehäuse 6 weist dazu eine zuströmseitige Einsenkung auf, in der das Vorsatz- oder Filtersieb 30 mit seinem äußeren Umfangsrand lösbar eingerastet ist. Das Vorsatz- oder Filtersieb 30 weist einen Zentralbereich auf, der eine Vielzahl von Sieböffnungen hat. Dieser, die Sieböffnungen aufweisende Zentralbereich des Vorsatz- oder Filtersiebes 30 ist von einer lochfreien Ringzone des Vorsatz- oder Filtersiebes 30 umgrenzt. Die äußere lochfreie Ringzone einerseits und der die Sieböffnungen aufweisende Zentralbereich des Vorsatz- oder Filtersiebes 30 andererseits sind auf der Abströmseite des Filtersiebs 30 durch die als Ventilsitz 16 dienende Durchflussöffnung voneinander getrennt. Da das Vorsatz- oder Filtersieb 30 unmittelbar am Einsetzgehäuse 6 der Einsetzeinheit 50 gehalten ist und da somit auf ein zusätzliches Zwischenstück verzichtet werden kann, zeichnet sich die in den Figuren 25 bis 28 dargestellte Einsetzeinheit 50 durch eine geringere Anzahl von Bauteilen sowie eine erleichterte Montage aus.

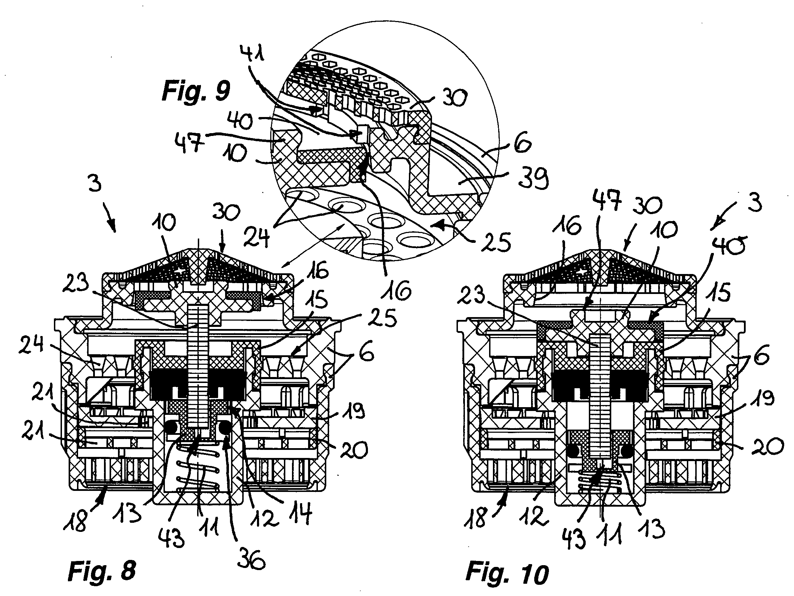

In den Figuren 8 bis 11 und 25 bis 30 ist gezeigt, dass der etwa tellerförmige Ventilkolben 10 zumindest in der, in der Ruhestellung am Ventilsitz 16 anliegenden Ringzone eine Oberflächenschicht 40 aus elastischem Material trägt. Diese Oberflächenschicht 40 ist am Ventilkolben 10 in radialer Richtung verschieblich montiert. Durch den Druck des anströmenden Wassers wird diese Oberflächenschicht 40 derart zusammengepresst und radial nach außen verdrängt, dass kurzfristigen Störgeräuschen während der Öffenbewegung des Ventils entgegengewirkt wird. Die Oberflächenschicht 40 zumindest der in den Figuren 8 bis 11 und 25 bis 28 gezeigten Ausführungsbeispiele ist hier ringscheibenförmig ausgestaltet, wobei die Ringscheibenöffnung dieser Oberflächenschicht von einem am Ventilkörper vorstehenden Zapfen 47 durchsetzt ist. Da diese dichtende elastische Oberflächenschicht 40, mit der hörbare Störgeräusche während der Schiebebewegung des Ventilkolbens 10 vermieden werden sollen, in der Ruhestellung des Ventils sich eventuell nur schwer vom Ventilsitz 16 löst, weist der als Ventilsitz 16 ausgebildete Umfangsrand im Einsetzgehäuse 2 der Einsetzeinheit 3 die in Figur 9 näher dargestellte, zumindest eine randseitig offene Einformung 41 auf, die auch in der Ruhestellung des Ventils wasserdurchlässig ist. Diese nutartige Einformung 41 soll eine übermäßige Abdichtung zwischen dem Ventilsitz 16 und der vom Ventilkolben 10 getragenen Oberflächenschicht 40 vermeiden, indem auch während der Ruhestellung des Ventils Wasser durch die zuström- und innenumfangsseitig kleinen nutenförmigen Einformungen 41 am tellerförmigen Ventilkolben 10 vorbeifließen kann, bis sich das Ventil mit der Zeit öffnet und in seine Offenstellung bewegt. Zusätzlich oder stattdessen können vergleichbare nutenförmige Einformungen aber auch am Ventilkolben 10 im Bereich der den Ventilsitz 16 beaufschlagenden Ringzone und insbesondere in dessen elastischer Oberflächenschicht 40 vorgesehen sein.

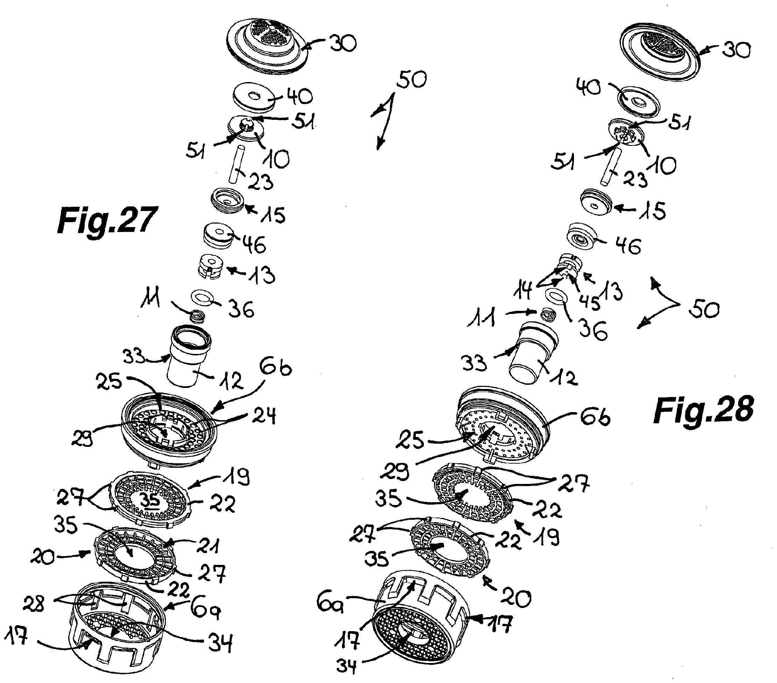

Zu dem gleichen Zweck ist im Ventilkolben 10 der in den Figuren 25 bis 28 gezeigten Einsetzeinheit 50 zumindest ein Bypass-Kanal integriert. Dieser zumindest eine Bypass-Kanal 51 ist am besten in den perspektivischen Einzelteildarstellungen gemäß den Figuren 27 und 28 erkennbar. In den Figuren 27 und 28 sind diese Bypass-Kanäle 51 an einem zapfenförmig vorstehenden Teilbereich des Ventilkolbens angeordnet. Durch diese Bypass-Kanäle können Toleranzschwankungen der elastischen Oberflächenschicht 40 besser ausgeglichen werden. Sollte diese elastische Oberflächenschicht 40 größer bzw. dicker ausfallen, ist dies für die in den Ventilkolben 10 integrierten Bypass-Kanäle 51 irrelevant, da ein gewisser Bypass auch in der Ruhestellung des Ventils gewährleistet ist. Bei der Einsetzeinheit 50 wird ein unerwünschtes Abdichten des Ventilsitzes 16 selbst dann vermieden, wenn eine größere elastische Oberflächenschicht die an einem Zwischenstück 39 vorgesehenen Einformungen 41 (vgl. Figur 9) verschließen würde.

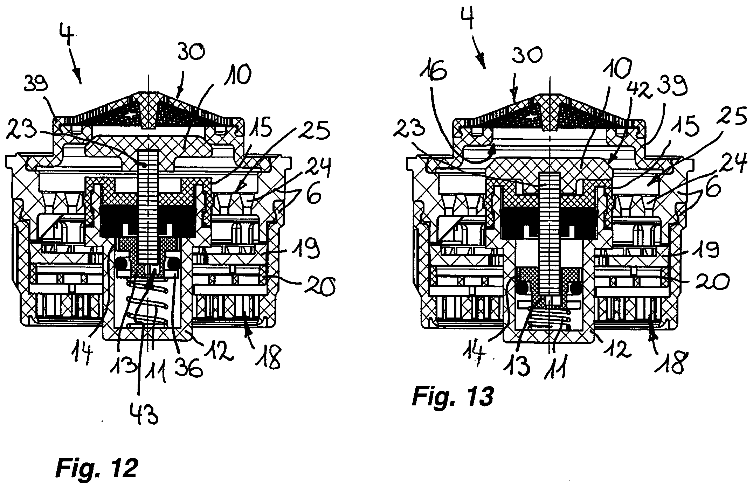

Der ebenfalls tellerförmig ausgestaltete Ventilkolben 10 der in den Figuren 12 bis 14 gezeigten Einsetzeinheit 4 weist in dem am Ventilsitz 16 anliegenden Kolbenrandbereich eine Fase 42 oder eine Rundung auf. Durch diese Fase 42 oder Rundung am Kolbenumfang soll ebenfalls unerwünschten Störgeräuschen während der Schiebebewegung des Ventilkolbens 10 entgegengewirkt werden. Die am Ventilkolben 10 umfangsseitig vorgesehene Fase 42 oder Rundung hat jedoch eventuell den Nachteil, dass innerhalb kürzester Zeit eine relativ große Menge an Wasser am Ventilkolben 10 vorbeifließt, so dass dem angestrebten Anschwellen des Wasserstroms während des Öffnens der Auslaufarmatur 9 etwas entgegengewirkt wird.

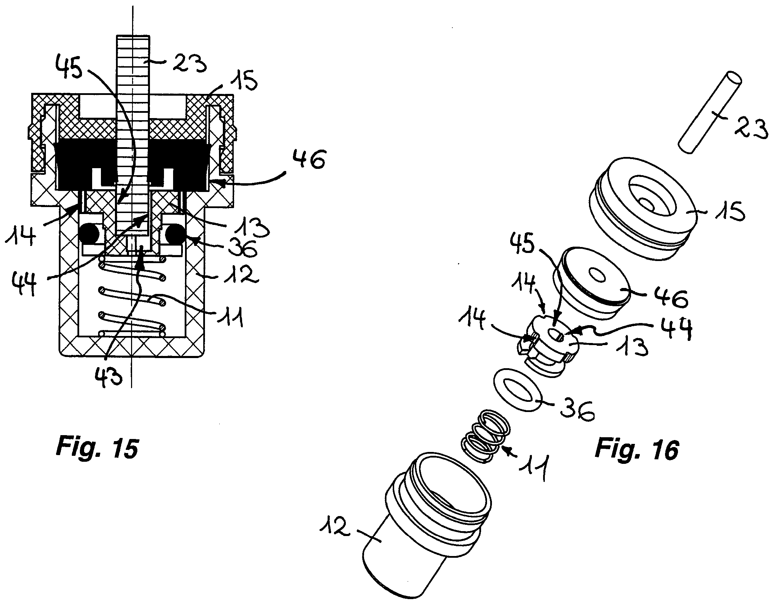

Die in den Figuren 21 bis 24 gezeigte Einsetzeinheit 5 ist zwischen zwei Leitungsabschnitten einer Wasserleitung, beispielsweise in dem in Figur 20 gezeigten Eck- oder Anschlußventil 7, montierbar. Die Einsetzeinheit 5 weist am Innenumfang seines Einsetzgehäuses 2 radial nach innen vorstehende Stege auf, die eine zentrale Einsetzöffnung 34 bilden, in die das Dämpfergehäuse 12 des Bewegungsdämpfers eingeschoben werden kann, bis der am Außenumfang dieses Dämpfergehäuses 12 vorgesehene Einsetzanschlag 33 an den als Gegenanschlag dienenden und die Einsetzöffnung 34 begrenzenden Rändern der Stege anliegt. Die sternförmig zueinander angeordneten Stege bilden hier einen Strömungsgleichrichter 26, der den Wasserstrom vergleichmäßigen soll. Aus einem Vergleich der Figuren 15 bis 18b einerseits und der Figuren 21 bis 24 andererseits wird deutlich, dass aber auch bei der Einsetzeinheit 5 das Dämpfergehäuse 12 des Bewegungsdämpfers über den Strömungsgleichrichter 26 direkt mit dem Einsetzgehäuse 2 einstückig verbunden sein kann.

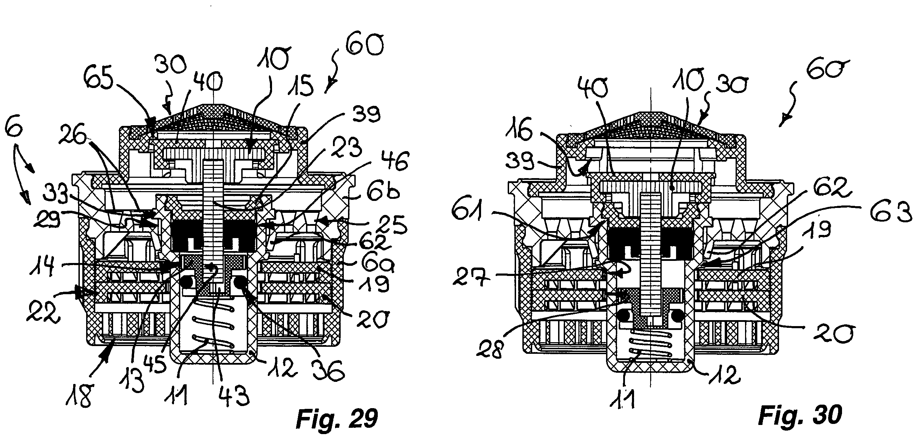

Der Ventilkolben 10 der in den Figuren 29 und 30 gezeigten Einsetzeinheit 60 trägt eine elastische Oberflächenschicht 40, die mit ihrem außenliegenden Umfangsrandbereich den zuströmseitigen platten- oder tellerförmigen Teilbereich des Ventilkolbens 10 hintergreift und auf diese Weise am Ventilkolben 10 sicher und fest gehalten ist. Zwar ist denkbar, den Ventilkolben 10 mit seiner elastischen Oberflächenschicht 40 als Mehrkomponenten-Spritzgussteil herzustellen, - die hier dargestellte Ausführung, bei welcher der Ventilkolben 10 und die elastische Oberflächenschicht 40 als separate Bauteile hergestellt und anschließend aneinander montiert werden, ist jedoch wesentlich einfacher und kostengünstiger herstellbar.

Auch bei der Einsetzeinheit 60 ist ein Dämpfergehäuse 12 vorgesehen, das am Strahlzerleger 25 verrastbar und vorzugsweise lösbar verrastbar ist. Der Einsetzanschlag 33 ist dazu am zuströmseitigen Gehäuseumfang des Dämpfergehäuses 12 vorgesehen und wirkt hier mit einem Gegenanschlag zusammen, der als eine, die Einsetzöffnung 29 im Strahlzerleger 25 zuströmseitig umgrenzende Ringnut oder ein Ringabsatz ausgebildet ist. Am abströmseitigen, die Einsetzöffnung 29 umgrenzenden Randbereich des Strahlzerlegers 25 ist ein umlaufender Kragen 62 angeformt, der mit seinem freien Kragenrand einen Ringabsatz am Gehäuseumfang des Dämpfergehäuses 12 verrastend hintergreift und das Dämpfergehäuse 12 damit sicher am Strahlzerleger 25 hält. Dieser Ringabsatz ist hier durch einen umfangsseitig vorstehenden Ringflansch 63 gebildet, welcher Ringflansch 63 auf den die zentrale Einsetzöffnung 27 des abströmseitig nachgeschalteten Einsetzteiles 19 umgrenzenden Stegen der Gitter- oder Netzstruktur dieses Einsetzteiles 19 aufliegt.

Der Ventilkolben 10 der Einsetzeinheit 60 ist hier stufenförmig ausgebildet, wobei die Stufen in Durchströmrichtung einen von Stufe zu Stufe reduzierten Stufendurchmesser haben. Dabei ist die die zuströmseitige Stirnfläche des Ventilkolbens 10 bildende Stufe teller- oder plattenförmig ausgebildet. Die elastische Oberflächenschicht 40 kann auch hier an ihrer zuströmseitigen Stirnfläche eine zentrale Öffnung aufweisen, um bei Bedarf einen Anspritzpunkt am Ventilkolben 10 aufzunehmen.

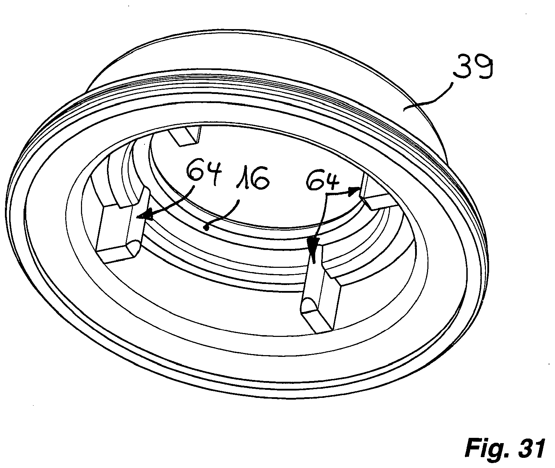

Aus der in Figur 31 gezeigten Unteransicht auf die Abströmseite des Zwischenstücks 39 ist erkennbar, dass auf der Abströmseite des Ventilsitzes 16 Führungsstege 64 vorgesehen sind, welche Führungsstege 64 in vorzugsweise gleichmäßigen Abständen um den Ventilkolben 10 am Ventilsitz 16 angeordnet und in Schiebe-Längsrichtung des Ventilkolbens 10 orientiert sind. Zwischen diesen Führungsstegen 64, an denen der Ventilkolben 10 während seiner Schiebebewegung linienförmig geführt ist, ist der Ventilkolben 10 derart eingespannt, dass unerwünschten Schiebe-, Schaukel- und Quietschgeräuschen während der Schiebebewegung des Ventilkolbens 10 entgegengewirkt wird. Wie aus den Figuren 29 und 30 zu erkennen ist, weist die elastische Oberflächenschicht 40 an ihrem zuströmseitigen Umfangsrand einen radial überstehenden Ringflansch 65 auf. Dieser Ringflansch 65 bildet an der Oberflächenschicht 40 eine Elastomerlippe, in welche sich die Führungsstege 64 einformen können.

### Bezugszeichenliste

- 1: Einsetzeinheit (gemäß den Fig. 1 bis 4)
- 2: Einsetzeinheit (gemäß den Fig. 5 bis 7)
- 3: Einsetzeinheit (gemäß den Fig. 8 bis 11)
- 4: Einsetzeinheit (gemäß den Fig. 12 bis 14)
- 5: Einsetzeinheit (gemäß den Fig. 21 bis 24)
- 6: Einsetzgehäuse
- 6a: abströmseitiges Gehäuseteil
- 6b: zuströmseitiges Gehäuseteil
- 7: Eck- oder Anschlussventil
- 8: Wasserauslauf
- 9: Auslaufarmatur
- 10: Ventilkolben
- 11: Druckfeder
- 12: Dämpfergehäuse
- 13: Dämpferkolben
- 14: Nut
- 15: Abdeckung
- 16: Ventilsitz
- 17: Belüftungsöffnung
- 18: Strömungsgleichrichter (gemäß den Fig. 1 bis 14)
- 19: Einsetzteil
- 20: Einsetzteil
- 21: Durchflussöffnung
- 22: Ringwand
- 23: Kolbenstange
- 24: Durchflusslöcher
- 25: Strahlzerleger
- 26: Strömungsgleichrichter (gemäß den Fig. 21 bis 24)
- 27: Sicherungsvorsprung
- 28: Gegeneinsenkung
- 29: Einsetzöffnung
- 30: Vorsatzsieb
- 31: Durchflussmengenregler
- 32: Drosselkörper
- 33: Einsetzanschlag
- 34: Einsetzöffnung (im Strömungsgleichrichter 18)
- 35: Einsetzöffnung (in den Einsetzteilen 19, 20)
- 36: Ringdichtung
- 37: Regelkern
- 38: Umfangswandung
- 39: Zwischenstück
- 40: Oberflächenschicht
- 41: Einformung
- 42: Fase
- 43: Verbindungskanal
- 44: Einformung
- 45: Einstecköffnung
- 46: Stopfen
- 47: Zapfen
- 50: Einsetzeinheit (gemäß den Figuren 25 bis 28)
- 51: Bypass-Kanal
- 60: Einsetzeinheit (gemäß den Figuren 29 und 30)
- 61: Ringnut
- 62: Kragen
- 63: Ringflansch
- 64: Führungsstege
- 65: Ringflansch an der Oberflächenschicht 40

## Patentansprüche

1. Sanitäre Einsetzeinheit (1, 2, 3, 4, 5, 50, 60) mit einem Einsetzgehäuse (6), in welchem Einsetzgehäuse (6) ein Ventil mit einem Ventilkolben (10) vorgesehen ist, welcher Ventilkolben (10) im Einsetzgehäuse (6) verschieblich geführt und von einer Ruhestellung unter dem Druck des anströmenden Wassers gegen die Rückstellkraft wenigstens eines Rückstellelements bewegbar ist, wobei die Einsetzeinheit (1, 2, 3, 4, 5, 50, 60) zumindest einen Bewegungsdämpfer aufweist, welcher die Bewegung des Ventilkolbens (10) von der Ruhestellung in die Offenposition dämpft oder bremst, **dadurch gekennzeichnet, dass** der zumindest eine Bewegungsdämpfer als hydraulischer Dämpfer ausgestaltet ist, der ein Dämpfergehäuse (12) hat, in welchem Dämpfergehäuse (12) ein Dämpferkolben (13) verschieblich geführt ist, wobei der Dämpferkolben (13) während einer Schiebebewegung von der Ruhestellung in die Offenposition Öl oder dergleichen zähflüssiges Fluid von der einen Seite des Dämpferkolbens (13) durch zumindest einen Verbindungskanal auf die andere Seite des Dämpferkolbens (13) verdrängt.

2. Sanitäre Einsetzeinheit nach Anspruch 1, **dadurch gekennzeichnet, dass** das wenigstens eine Rückstellelement als Rückstellfeder ausgebildet ist.

3. Sanitäre Einsetzeinheit nach Anspruch 1 oder 2, **dadurch gekennzeichnet, dass** das wenigstens eine Rückstellelement als Druckfeder (11) ausgebildet ist.

4. Sanitäre Einsetzeinheit nach einem der Ansprüche 1 bis 3, **dadurch gekennzeichnet, dass** der Ventilkolben (10) mit dem Dämpferkolben (13) über eine Kolbenstange (23) in Bewegungsverbindung steht.

5. Sanitäre Einsetzeinheit nach Anspruch 4, **dadurch gekennzeichnet, dass** die Kolbenstange (23) an ihrem entgegen der Strömungsrichtung orientierten ersten Stangenende mit dem Ventilkolben (10) und an ihrem in die Strömungsrichtung weisenden zweiten Stangenende mit dem Dämpferkolben (13) verbunden ist.

6. Sanitäre Einsetzeinheit nach einem der Ansprüche 1 bis 5, **dadurch gekennzeichnet, dass** das wenigstens eine Rückstellelement die der Durchströmrichtung der Einsetzeinheit (1, 2, 3, 4, 5, 50, 60) abgewandte Stirnseite des Dämpferkolbens (13) druckbeaufschlagt.

7. Sanitäre Einsetzeinheit nach Anspruch 6, **dadurch gekennzeichnet, dass** das wenigstens eine Rückstellelement zwischen einem geschlossenen Gehäuseboden des Dämpfergehäuses (12) und der der Durchströmrichtung abgewandten Stirnseite des Dämpferkolbens (13) angeordnet ist.

8. Sanitäre Einsetzeinheit nach einem der Ansprüche 4 bis 7, **dadurch gekennzeichnet, dass** das Dämpfergehäuse (12) eine stirnseitige Gehäuseöffnung hat, die mittels zumindest einer ringscheibenförmigen Abdeckung (15) verschlossen ist, deren Ringscheibenöffnung von der Kolbenstange (23) durchsetzt ist.

9. Sanitäre Einsetzeinheit nach Anspruch 8, **dadurch gekennzeichnet, dass** das Dämpfergehäuse (12) gegenüber dem Einsetzgehäuse (6) mittels eines ringscheibenförmigen Stopfens (46) abgedichtet ist, dessen Ringscheibenöffnung von der Kolbenstange (23) durchsetzt ist.

10. Sanitäre Einsetzeinheit nach Anspruch 9, **dadurch gekennzeichnet, dass** der Stopfen (46) am Gehäuseinnenumfang des Dämpfergehäuses (12) vorzugsweise lösbar gehalten ist.

11. Sanitäre Einsetzeinheit nach Anspruch 9 oder 10, **dadurch gekennzeichnet, dass** der Stopfen (46) zwischen dem Gehäuseinnenumfang des Dämpfergehäuses (12) und der dessen Ringscheibenöffnung durchsetzenden Kolbenstange (43) abdichtet.

12. Sanitäre Einsetzeinheit nach einem der Ansprüche 1 bis 11, **dadurch gekennzeichnet, dass** der Ventilkolben (10) des Ventils in der Ruhestellung an einem als Ventilsitz (16) ausgebildeten und eine Durchflussöffnung umgrenzenden Umfangsrand im Einsetzgehäuse (6) vorzugsweise partiell oder mit Spiel anliegt.

13. Sanitäre Einsetzeinheit nach Anspruch 12, **dadurch gekennzeichnet, dass** der Ventilkolben (10) des Ventils in der Offenstellung von dem als Ventilsitz (16) ausgebildeten Umfangsrand im Einsetzgehäuse (6) beabstandet ist.

14. Sanitäre Einsetzeinheit nach einem der Ansprüche 1 bis 13, **dadurch gekennzeichnet, dass** die sanitäre Einsetzeinheit (1, 2, 3, 4, 50, 60) als unbelüfteter Strahlformer oder als Strahlbelüfter ausgebildet ist, welcher Strahlbelüfter bei Gebrauch das durchströmende Wasser mit Umgebungsluft durchmischt.

15. Sanitäre Einsetzeinheit nach Anspruch 14, **dadurch gekennzeichnet, dass** der Strahlbelüfter einen Strahlzerleger (25) hat, der das durchströmende Wasser bei Gebrauch in eine Vielzahl von Einzelstrahlen aufteilt.

16. Sanitäre Einsetzeinheit nach Anspruch 15, **dadurch gekennzeichnet, dass** der Strahlzerleger (25) als Lochplatte ausgebildet ist, die eine Vielzahl von Einzelstrahlen bildender Durchflusslöcher (24) hat.

17. Sanitäre Einsetzeinheit nach Anspruch 15 oder 16, **dadurch gekennzeichnet, dass** in der Umfangswandung des Einsetzgehäuses (6) zumindest eine Belüftungsöffnung (17) vorgesehen ist, die in einer in Strömungsrichtung vorzugsweise unmittelbar unterhalb dem Strahlzerleger (25) angeordneten Ringzone der Gehäuseumfangswandung des Einsetzgehäuses (6) vorgesehen ist.

18. Sanitäre Einsetzeinheit nach einem der Ansprüche 15 bis 17, **dadurch gekennzeichnet, dass** der Strahlbelüfter einen abströmseitigen Strömungsgleichrichter (18) mit einer Waben-, Gitter- oder Netzstruktur aufweist, welche Waben-, Gitter- oder Netzstruktur durch einander an Kreuzungsknoten kreuzende Stege gebildet ist.

19. Sanitäre Einsetzeinheit nach Anspruch 18, **dadurch gekennzeichnet, dass** die Waben-, Gitter- oder Netzstruktur des Strömungsgleichrichters (18) einstückig an das Einsetzgehäuse (6) angeformt ist.

20. Sanitäre Einsetzeinheit nach Anspruch 18 oder 19, **dadurch gekennzeichnet, dass** zwischen dem Strahlzerleger (25) und dem Strömungsgleichrichter (18) wenigstens ein Einsetzteil (19, 20) mit einer Gitter- oder Netzstruktur aus einander an Kreuzungsknoten kreuzenden Stegen vorgesehen ist.

21. Sanitäre Einsetzeinheit nach Anspruch 20, **dadurch gekennzeichnet, dass** das wenigstens eine Einsetzteil (19, 20) zumindest an seinem Außenumfang eine umlaufende Ringwand (22) hat, an welche Ringwand (22) die Gitter- oder Netzstruktur dieses Einsetzteiles (19, 20) einstückig angeformt ist.

22. Sanitäre Einsetzeinheit nach einem der Ansprüche 15 bis 21, **dadurch gekennzeichnet, dass** das Dämpfergehäuse (12) mit dem Strahlzerleger (25) lösbar verbindbar oder einstückig verbunden ist.

23. Sanitäre Einsetzeinheit nach Anspruch 22, **dadurch gekennzeichnet, dass** das Dämpfergehäuse (12) in einer vorzugsweise zentralen Einsetzöffnung (29) des Strahlzerlegers (25) insbesondere mittels einer Rast- oder Schnappverbindung gehalten ist.

24. Sanitäre Einsetzeinheit nach einem der Ansprüche 15 bis 23, **dadurch gekennzeichnet, dass** der Strahlzerleger (25) sowie vorzugsweise auch der Strömungsgleichrichter (26) und gegebenenfalls auch das zumindest eine, zwischen Strahlzerleger (25) und Strömungsgleichrichter (26) vorbesehene Einsetzteil (19, 20) jeweils eine Einsetzöffnung (29, 34, 35) aufweisen, welche Einsetzöffnung(en) von dem Dämpfergehäuse (12) durchsetzt ist (sind).

25. Sanitäre Einsetzeinheit nach einem der Ansprüche 1 bis 24, **dadurch gekennzeichnet, dass** der Dämpferkolben (13) während einer Schiebebewegung bei Gebrauch das Öl oder dergleichen zähflüssiges Fluid von der Ruhestellung in die Offenposition durch zumindest einen Verbindungskanal und von der Offenposition in die Ruhestellung durch wenigstens einen Rückströmkanal verdrängt.

26. Sanitäre Einsetzeinheit nach einem der Ansprüche 23 bis 25, **dadurch gekennzeichnet, dass** am Dämpfergehäuse (12) außenumfangsseitig ein Einsetzanschlag (33) vorgesehen ist, und dass das Dämpfergehäuse (12) in die Einsetzöffnung (29) im Strahlzerleger (25) einsetzbar ist, bis der Einsetzanschlag (33) an einem Gegenanschlag am Strahlzerleger (25) anliegt.

27. Sanitäre Einsetzeinheit nach Anspruch 25 oder 26, **dadurch gekennzeichnet, dass** der Dämpferkolben (13) an seinem Außenumfang wenigstens eine umfangsseitig offene Nut (14) aufweist, die mit dem Gehäuseinnenumfang des Dämpfergehäuses (12) den zumindest einen Rückströmkanal umgrenzt.

28. Sanitäre Einsetzeinheit nach einem der Ansprüche 25 bis 27, **dadurch gekennzeichnet, dass** der wenigstens eine Verbindungskanal zuströmseitig einen Kanaleinlass hat, der an der dem Gehäuseboden des Dämpfergehäuses (12) zugewandten Kolbenstirnseite des Dämpferkolbens (13) angeordnet ist.

29. Sanitäre Einsetzeinheit nach Anspruch 28, **dadurch gekennzeichnet, dass** der wenigstens eine Verbindungskanal abströmseitig einen Kanalabschnitt hat, der vorzugsweise in einer nutförmigen Einformung (44) zwischen der Kolbenstange (23) und einer Innenumfangswandung vorgesehen ist, welche Innenumfangswandung eine, das eine Stangenende der Kolbenstange (23) in sich aufnehmende Einstecköffnung (45) im Dämpferkolben (13) umgrenzt.

30. Sanitäre Einsetzeinheit nach einem der Ansprüche 1 bis 29, **dadurch gekennzeichnet, dass** der Bewegungsdämpfer eine unter dem Druck des anströmenden Wassers wirksame Druckstufe, während der sich das Ventil von seiner Ruhestellung in die Offenstellung bewegt, und eine Zugstufe hat, während der eine Rückstellbewegung des Dämpferkolbens von der Offenstellung in die Ruhestellung des Ventils erfolgt.

31. Sanitäre Einsetzeinheit nach Anspruch 30, **dadurch gekennzeichnet, dass** die Druckstufe des Bewegungsdämpfers härter als die Zugstufe ausgestaltet ist.

32. Sanitäre Einsetzeinheit nach einem der Ansprüche 25 bis 31, **dadurch gekennzeichnet, dass** auf der der Durchströmungsrichtung der Einsetzeinheit (1, 2, 3, 4, 5, 50, 60) abgewandten Stirnseite des Dämpferkolbens (13) eine Ringdichtung (36) vorgesehen ist, welche (36) während einer Schiebebewegung des Dämpferkolbens (13) von der Ruhestellung in die Offenposition den zumindest einen Rückströmkanal verschließt.

33. Sanitäre Einsetzeinheit nach Anspruch 12 oder nach einem der Ansprüche 13 bis 32 mit Rückbezug auf Anspruch 12, **dadurch gekennzeichnet, dass** der vorzugsweise tellerförmige Ventilkolben (10) zumindest in der, in der Ruhestellung am Ventilsitz (16) anliegenden Ringzone der zuströmseitigen Kolbenstirnseite eine Oberflächenschicht (40) aus elastischem Material trägt.

34. Sanitäre Einsetzeinheit nach Anspruch 12 oder nach einem der Ansprüche 13 bis 33 mit Rückbezug auf Anspruch 12, **dadurch gekennzeichnet, dass** der Ventilkolben (10) an seiner dem Ventilsitz (16) zugewandten Stirnseite eine Oberflächenschicht (40) aus elastischem Material trägt, die am Ventilkolben (10) in radialer Richtung verschieblich montiert ist.

35. Sanitäre Einsetzeinheit nach Anspruch 34, **dadurch gekennzeichnet, dass** die Oberflächenschicht (40) ringscheibenförmig ausgestaltet ist und dass die Ringscheibenöffnung dieser Oberflächenschicht (40) von einem am Ventilkolben (10) vorstehenden Zapfen (47) durchsetzt ist.

36. Sanitäre Einsetzeinheit nach Anspruch 34, **dadurch gekennzeichnet, dass** an die dem Ventilkolben (10) zugewandte Flachseite der Oberflächenschicht (40) wenigstens ein Steckzapfen angeformt ist, welcher Steckzapfen in einer zugeordneten Zapfenöffnung des Ventilkolbens (10) gehalten ist.

37. Sanitäre Einsetzeinheit nach Anspruch 13 oder nach einem der Ansprüche 14 bis 36 mit Rückbezug auf Anspruch 13, **dadurch gekennzeichnet, dass** der als Ventilsitz (16) ausgebildete Umfangsrand im Einsetzgehäuse (6) zumindest eine randseitige Einformung (41) hat, welche Einformung (41) auch in der Ruhestellung des Ventils wasserdurchlässig ist.

38. Sanitäre Einsetzeinheit nach Anspruch 12 oder nach einem der Ansprüche 13 bis 37 mit Rückbezug auf Anspruch 12, **dadurch gekennzeichnet, dass** an der Zuströmseite des Einsetzgehäuses (6) ein ring- oder hülsenförmiges Zwischenstück (39) vorgesehen ist, welches Zwischenstück (39) die als Ventilsitz (16) dienende Durchflussöffnung aufweist.

39. Sanitäre Einsetzeinheit nach Anspruch 38, **dadurch gekennzeichnet, dass** an der Zuströmseite des Zwischenstücks (39) ein Vorsatz- oder Filtersieb (30) und vorzugsweise auch ein dazwischen angeordneter Durchflussmengenregler (31) gehalten ist.

40. Sanitäre Einsetzeinheit nach einem der Ansprüche 34 bis 39, **dadurch gekennzeichnet, dass** die Oberflächenschicht (40) mit ihrem Umfangsrandbereich den Ventilkolben (10) und insbesondere einen flanschartig überstehenden Teilbereich des Ventilkolbens (10) hintergreift.

41. Sanitäre Einsetzeinheit nach Anspruch 12 oder nach einem der Ansprüche 13 bis 40 mit Rückbezug auf Anspruch 12, **dadurch gekennzeichnet, dass** auf der Abströmseite des Ventilsitzes (16) Führungsrippen oder Führungsstege (64) vorgesehen sind, die während der Schiebebewegung des Ventilkolbens (10) jeweils eine linienförmige Kolbenführung für den Ventilkolben (10) bilden.

42. Sanitäre Einsetzeinheit nach Anspruch 41, **dadurch gekennzeichnet, dass** die Oberflächenschicht (40) einen umfangsseitig überstehenden Ringflansch (65) aufweist, und dass die Führungsrippen oder Führungsstege (64) den Ringflansch (65) der Oberflächenschicht (40) beaufschlagen.

43. Verwendung einer sanitären Einsetzeinheit nach einem der Ansprüche 1 bis 42, **dadurch gekennzeichnet, dass** die sanitäre Einsetzeinheit (5) in einem Eck- oder Anschlussventil (7) einer sanitären Wasserleitung zwischengeschaltet ist.

44. Verwendung einer sanitären Einsetzeinheit nach einem der Ansprüche 1 bis 42, **dadurch gekennzeichnet, dass** die sanitäre Einsetzeinheit (1, 2, 3, 4, 50, 60) im Wasserauslauf einer sanitären Auslaufarmatur (9) montiert ist.

## Claims

1. Sanitary insert unit (1, 2, 3, 4, 5, 50, 60) having an insert housing (6), in which insert housing (6) a valve having a valve piston (10) is provided, which valve piston (10) is guided in a displaceable manner in the insert housing (6) and is movable from a rest position, under the pressure of the inflowing water, counter to the restoring force of at least one restoring element, wherein the insert unit (1, 2, 3, 4, 5, 50, 60) has at least one movement damper, which damps or brakes the movement of the valve piston (10) from the rest position into the open position, **characterized in that** the at least one movement damper is configured as a hydraulic damper which has a damper housing (12), in which damper housing (12) a damper piston (13) is guided in a displaceable manner, wherein, during a sliding movement from the rest position into the open position, the damper piston (13) displaces oil or similar viscous fluid from one side of the damper piston (13) to the other side of the damper piston (13) through at least one connecting duct.

2. Sanitary insert unit according to Claim 1, **characterized in that** the at least one restoring element is in the form of a restoring spring.

3. Sanitary insert unit according to Claim 1 or 2, **characterized in that** the at least one restoring element is in the form of a compression spring (11).

4. Sanitary insert unit according to one of Claims 1 to 3, **characterized in that** the valve piston (10) is connected to the damper piston (13) in terms of movement via a piston rod (23).

5. Sanitary insert unit according to Claim 4, **characterized in that** the piston rod (23) is connected to the valve piston (10) at its first rod end oriented counter to the direction of flow, and is connected to the damper piston (13) at its second rod end directed in the direction of flow.

6. Sanitary insert unit according to one of Claims 1 to 5, **characterized in that** the at least one restoring element applies pressure to that end side of the damper piston (13) that faces away from the flow-through direction of the insert unit (1, 2, 3, 4, 5, 50, 60).

7. Sanitary insert unit according to Claim 6, **characterized in that** the at least one restoring element is arranged between a closed housing bottom of the damper housing (12) and that end side of the damper piston (13) that faces away from the flow-through direction.

8. Sanitary insert unit according to one of Claims 4 to 7, **characterized in that** the damper housing (12) has an end-side housing opening, which is closed by means of at least one cover (15) in the form of an annular disc, the annular-disc opening of which has the piston rod (23) passing through it.

9. Sanitary insert unit according to Claim 8, **characterized in that** the damper housing (12) is sealed off from the insert housing (6) by means of a plug (46) in the form of an annular disc, the annular-disc opening of which has the piston rod (23) passing through it.

10. Sanitary insert unit according to Claim 9, **characterized in that** the plug (46) is held preferably in a releasable manner on the housing inner circumference of the damper housing (12).

11. Sanitary insert unit according to Claim 9 or 10, **characterized in that** the plug (46) provides sealing between the housing inner circumference of the damper housing (12) and the piston rod (43) passing through the annular-disc opening thereof.

12. Sanitary insert unit according to one of Claims 1 to 11, **characterized in that**, in the rest position, the valve piston (10) of the valve butts preferably partially or with play against a circumferential rim in the insert housing (6), said circumferential rim being in the form of a valve seat (16) and bounding a flow-through opening.

13. Sanitary insert unit according to Claim 12, **characterized in that** the valve piston (10) of the valve is spaced apart, in the open position, from the circumferential rim, in the form of a valve seat (16), in the insert housing (6).

14. Sanitary insert unit according to one of Claims 1 to 13, **characterized in that** the sanitary insert unit (1, 2, 3, 4, 50, 60) is in the form of an unaerated jet former or of a jet aerator, which jet aerator mixes the water flowing through with ambient air when in use.

15. Sanitary insert unit according to Claim 14, **characterized in that** the jet aerator has a jet splitter (25), which divides the water flowing through into a multiplicity of individual jets when in use.

16. Sanitary insert unit according to Claim 15, **characterized in that** the jet splitter (25) is in the form of a perforated plate, which has a multiplicity of flow-through holes (24) that form individual jets.

17. Sanitary insert unit according to Claim 15 or 16, **characterized in that**, in the circumferential wall of the insert housing (6), at least one aeration opening (17) is provided, which is provided in an annular zone of the housing circumferential wall of the insert housing (6), said annular zone being arranged preferably directly beneath the jet splitter (25) in the direction of flow.

18. Sanitary insert unit according to one of Claims 15 to 17, **characterized in that** the jet aerator has an outflow-side flow straightener (18) having a honeycomb, lattice or mesh structure, which honeycomb, lattice or mesh structure is formed by webs that intersect at intersecting points.

19. Sanitary insert unit according to Claim 18, **characterized in that** the honeycomb, lattice or mesh structure of the flow straightener (18) is integrally formed on the insert housing (6).

20. Sanitary insert unit according to Claim 18 or 19, **characterized in that**, between the jet splitter (25) and the flow straightener (18), at least one insert part (19, 20) having a lattice or mesh structure made up of webs that intersect at intersecting points is provided.

21. Sanitary insert unit according to Claim 20, **characterized in that** the at least one insert part (19, 20) has, at least on its outer circumference, an encircling annular wall (22), on which annular wall (22) the lattice or mesh structure of this insert part (19, 20) is integrally formed.

22. Sanitary insert unit according to one of Claims 15 to 21, **characterized in that** the damper housing (12) is releasably connectable or integrally connected to the jet splitter (25).

23. Sanitary insert unit according to Claim 22, **characterized in that** the damper housing (12) is held in a preferably central insertion opening (29) of the jet splitter (25), in particular by means of a latching or snap-fit connection.

24. Sanitary insert unit according to one of Claims 15 to 23, **characterized in that** the jet splitter (25) and preferably also the flow straightener (26) and optionally also the at least one insert part (19, 20) provided between the jet splitter (25) and flow straightener (26) each have an insertion opening (29, 34, 35), which insertion opening(s) has/have the damper housing (12) passing through it/them.

25. Sanitary insert unit according to one of Claims 1 to 24, **characterized in that**, during a sliding movement when in use, the damper piston (13) displaces oil or similar viscous fluid through at least one connecting duct from the rest position into the open position and through at least one return-flow duct from the open position into the rest position.

26. Sanitary insert unit according to one of Claims 23 to 25, **characterized in that** an insertion stop (33) is provided on the outer circumference of the damper housing (12), and **in that** the damper housing (12) is insertable into the insertion opening (29) in the jet splitter (25) until the insertion stop (33) butts against a mating stop on the jet splitter (25).

27. Sanitary insert unit according to Claim 25 or 26, **characterized in that** the damper piston (13) has, on its outer circumference, at least one circumferentially open groove (14), which bounds the at least one return-flow duct together with the housing inner circumference of the damper housing (12).

28. Sanitary insert unit according to one of Claims 25 to 27, **characterized in that** the at least one connecting duct has, on the inflow side, a duct inlet, which is arranged on that piston end side of the damper piston (13) that faces the housing bottom of the damper housing (12).

29. Sanitary insert unit according to Claim 28, **characterized in that** the at least one connecting duct has, on the outflow side, a duct portion which is provided preferably in a groove-like indentation (44) between the piston rod (23) and an inner circumferential wall, which inner circumferential wall bounds a plug-in opening (45) in the damper piston (13), said plug-in opening (45) accommodating one rod end of the piston rod (23).

30. Sanitary insert unit according to one of Claims 1 to 29, **characterized in that** the movement damper has a pressure stage, which is active under the pressure of the inflowing water and during which the valve moves from its rest position into the open position, and a rebound stage, during which a restoring movement of the damper piston from the open position into the rest position of the valve takes place.

31. Sanitary insert unit according to Claim 30, **characterized in that** the pressure stage of the movement damper is configured to be harder than the rebound stage.

32. Sanitary insert unit according to one of Claims 25 to 31, **characterized in that** a ring seal (36) is provided on that end side of the damper piston (13) that faces away from the flow-through direction of the insert unit (1, 2, 3, 4, 5, 50, 60), said ring seal (36) closing the at least one return-flow duct during a sliding movement of the damper piston (13) from the rest position into the open position.

33. Sanitary insert unit according to Claim 12 or according to one of Claims 13 to 32 where referring back to Claim 12, **characterized in that** the preferably plate-shaped valve piston (10) bears a surface layer (40) made of elastic material, at least in the annular zone of the inflow-side piston end side, said annular zone butting against the valve seat (16) in the rest position.

34. Sanitary insert unit according to Claim 12 or according to one of Claims 13 to 33 where referring back to Claim 12, **characterized in that** the valve piston (10) bears a surface layer (40) made of elastic material on its end side facing the valve seat (16), said surface layer (40) being mounted on the valve piston (10) so as to be displaceable in a radial direction.

35. Sanitary insert unit according to Claim 34, **characterized in that** the surface layer (40) is configured in the form of an annular disc, and **in that** the annular-disc opening in this surface layer (40) has a peg (47), protruding from the valve piston (10), passing through it.

36. Sanitary insert unit according to Claim 34, **characterized in that** at least one plug-in peg is integrally formed on the flat side, facing the valve piston (10), of the surface layer (40), which plug-in peg is held in an associated peg opening in the valve piston (10).

37. Sanitary insert unit according to Claim 13 or according to one of Claims 14 to 36 where referring back to Claim 13, **characterized in that** the circumferential rim, in the form of a valve seat (16), in the insert housing (6) has at least one peripheral indentation (41), which indentation (41) is water-permeable even in the rest position of the valve.

38. Sanitary insert unit according to Claim 12 or according to one of Claims 13 to 37 where referring back to Claim 12, **characterized in that** an annular or sleeve-shaped intermediate piece (39) is provided on the inflow side of the insert housing (6), which intermediate piece (39) has the flow-through opening serving as a valve seat (16).

39. Sanitary insert unit according to Claim 38, **characterized in that** a dome screen or filter screen (30) and preferably also a flow rate regulator (31) arranged therebetween are held on the inflow side of the intermediate piece (39).

40. Sanitary insert unit according to one of Claims 34 to 39, **characterized in that** the surface layer (40) engages with its circumferential-rim region behind the valve piston (10) and in particular behind a subregion, protruding in a flange-like manner, of the valve piston (10).

41. Sanitary insert unit according to Claim 12 or according to one of Claims 13 to 40 where referring back to Claim 12, **characterized in that** guide ribs or guide webs (64) are provided on the outflow side of the valve seat (16), said guide ribs or guide webs (64) each forming a linear piston guide for the valve piston (10) during the sliding movement of the valve piston (10).

42. Sanitary insert unit according to Claim 41, **characterized in that** the surface layer (40) has a circumferentially protruding annular flange (65), and **in that** the guide ribs or guide webs (64) impinge on the annular flange (65) of the surface layer (40) .

43. Use of a sanitary insert unit according to one of Claims 1 to 42, **characterized in that** the sanitary insert unit (5) is interposed in a corner valve or connection valve (7) of a sanitary water pipe.

44. Use of a sanitary insert unit according to one of Claims 1 to 42, **characterized in that** the sanitary insert unit (1, 2, 3, 4, 50, 60) is mounted in the water outlet of a sanitary outlet fitting (9).

## Revendications

1. Unité d'insertion sanitaire (1, 2, 3, 4, 5, 50, 60) comprenant un boîtier d'insertion (6), boîtier d'insertion (6) dans lequel il est prévu une soupape comprenant un piston de soupape (10), ledit piston de soupape (10) étant guidé de façon coulissante dans le boîtier d'insertion (6) et étant déplaçable à partir d'une position de repos sous la pression de l'eau qui arrive contre la force de rappel d'au moins un élément de rappel, dans laquelle l'unité d'insertion (1, 2, 3, 4, 5, 50, 60) présente au moins un amortisseur de mouvement, qui amortit ou freine le mouvement du piston de soupape (10) depuis la position de repos jusqu'à la position ouverte, **caractérisée en ce que** ledit au moins un amortisseur de mouvement est réalisé sous la forme d'un amortisseur hydraulique, qui comporte un boîtier d'amortisseur (12), un piston d'amortisseur (13) étant guidé de façon coulissante dans ledit boîtier d'amortisseur (12), dans laquelle le piston d'amortisseur (13) refoule, pendant un mouvement de glissement depuis la position de repos jusqu'à la position ouverte ou analogue, un fluide visqueux d'un premier côté du piston d'amortisseur (13) à travers au moins un canal de communication jusqu'à l'autre côté du piston d'amortisseur (13).

2. Unité d'insertion sanitaire selon la revendication 1, **caractérisée en ce que** ledit au moins un élément de rappel est formé par un ressort de rappel.

3. Unité d'insertion sanitaire selon la revendication 1 ou 2, **caractérisée en ce que** ledit au moins un élément de rappel est formé par un ressort de pression (11).

4. Unité d'insertion sanitaire selon l'une quelconque ,des revendications 1 à 3, **caractérisée en ce que** le piston de soupape (10) est en relation de mouvement avec le piston d'amortisseur (13) par l'intermédiaire d'une tige de piston (23).

5. Unité d'insertion sanitaire selon la revendication 4, **caractérisée en ce que** la tige de piston (23) est reliée par sa première extrémité de tige orientée à l'opposé de la direction d'écoulement au piston de soupape (10) et par sa seconde extrémité de tige orientée dans la direction d'écoulement au piston d'amortisseur (13).

6. Unité d'insertion sanitaire selon l'une quelconque des revendications 1 à 5, **caractérisée en ce que** ledit au moins un élément de rappel exerce une pression sur le côté frontal du piston d'amortisseur (13) s'opposant à la direction d'écoulement à travers l'unité d'insertion (1, 2, 3, 4, 5, 50, 60).

7. Unité d'insertion sanitaire selon la revendication 6, **caractérisée en ce que** ledit au moins un élément de rappel est disposé entre un fond de boîtier fermé du boîtier d'amortisseur (12) et le côté frontal du piston d'amortisseur (13) orienté à l'opposé de la direction d'écoulement.

8. Unité d'insertion sanitaire selon l'une quelconque des revendications 4 à 7, **caractérisée en ce que** le boîtier d'amortisseur (12) comporte une ouverture de boîtier frontale, qui est fermée au moyen d'au moins un couvercle en forme de disque annulaire (15), dont l'ouverture de disque annulaire est traversée par la tige de piston (23).

9. Unité d'insertion sanitaire selon la revendication 8, **caractérisée en ce que** le boîtier d'amortisseur (12) est rendu étanche par rapport au boîtier d'insertion (6) au moyen d'un bouchon en forme de disque annulaire (46), dont l'ouverture de disque annulaire est traversée par la tige de piston (23).

10. Unité d'insertion sanitaire selon la revendication 9, **caractérisée en ce que** le bouchon (46) est maintenu, de préférence de façon amovible, sur la périphérie intérieure de boîtier du boîtier d'amortisseur (12).

11. Unité d'insertion sanitaire selon la revendication 9 ou 10, **caractérisée en ce que** le bouchon (46) est étanche entre la périphérie intérieure de boîtier du boîtier d'amortisseur (12) et la tige de piston (43) traversant l'ouverture de disque annulaire de celui-ci.

12. Unité d'insertion sanitaire selon l'une quelconque des revendications 1 à 11, **caractérisée en ce que** le piston de soupape (10) de la soupape s'applique dans la position de repos dans le boîtier d'insertion (6), de préférence partiellement ou avec du jeu, sur un bord périphérique réalisé en forme de siège de soupape (16) et qui entoure une ouverture de passage d'écoulement.

13. Unité d'insertion sanitaire selon la revendication 12, **caractérisée en ce que** le piston de soupape (10) de la soupape se trouve dans la position ouverte espacé du bord périphérique réalisé en forme de siège de soupape (16) dans le boîtier d'insertion (6).

14. Unité d'insertion sanitaire selon l'une quelconque des revendications 1 à 13, **caractérisée en ce que** l'unité d'insertion sanitaire (1, 2, 3, 4, 50, 60) est formée par un régulateur de jet non aéré ou par un aérateur de jet, ledit aérateur de jet mélangeant, en cours d'utilisation, l'eau en circulation avec de l'air ambiant.

15. Unité d'insertion sanitaire selon la revendication 14, **caractérisée en ce que** l'aérateur de jet comporte un brise-jet (25), qui divise en cours d'utilisation l'eau en circulation en une multiplicité de jets individuels.

16. Unité d'insertion sanitaire selon la revendication 15, **caractérisée en ce que** le brise-jet (25) est formé par une plaque perforée, qui présente une multiplicité de trous de passage (24) formant des jets individuels.

17. Unité d'insertion sanitaire selon la revendication 15 ou 16, **caractérisée en ce qu'**l est prévu dans la paroi périphérique du boîtier d'insertion (6) au moins une ouverture d'aération (17), qui est prévue dans une zone annulaire de la paroi périphérique de boîtier du boîtier d'insertion ((6) disposée de préférence immédiatement en dessous du brise-jet (25) dans la direction d'écoulement.

18. Unité d'insertion sanitaire selon l'une quelconque des revendications 15 à 17, **caractérisée en ce que** l'aérateur de jet présente un redresseur d'écoulement côté aval (18) avec une structure de nid d'abeilles, de grille ou de filet, ladite structure de nid d'abeilles, de grille ou de filet étant formée par des nervures qui se croisent mutuellement en des nœuds de croisement.

19. Unité d'insertion sanitaire selon la revendication 18, **caractérisée en ce que** la structure de nid d'abeilles, de grille ou de filet du redresseur d'écoulement (18) est réalisée d'une seule pièce sur le boîtier d'insertion (6).

20. Unité d'insertion sanitaire selon la revendication 18 ou 19, **caractérisée en ce qu'**il est prévu entre le brise-jet (25) et le redresseur d'écoulement (18) au moins une pièce à insérer (19, 20) qui présente une structure de nid d'abeilles, de grille ou de filet composée de nervures se croisant mutuellement, en des nœuds de croisement.

21. Unité d'insertion sanitaire selon la revendication 20, **caractérisée en ce que** ladite au moins une pièce à insérer (19, 20) comporte au moins au niveau de sa périphérie extérieure une paroi annulaire périphérique (22), paroi annulaire (22) sur laquelle la structure de nid d'abeilles, de grille ou de filet de cette pièce à insérer (19, 20) est formée d'une seule pièce.

22. Unité d'insertion sanitaire selon l'une quelconque des revendications 15 à 21, **caractérisée en ce que** le boîtier d'amortisseur (12) peut être assemblé de façon amovible au ou est assemblé d'une seule pièce avec le brise-jet (25).

23. Unité d'insertion sanitaire selon la revendication 22, **caractérisée en ce que** le boîtier d'amortisseur (12) est maintenu dans une ouverture d'insertion de préférence centrale (29) du brise-jet (25), en particulier au moyen d'un assemblage à encliquetage ou à déclic.

24. Unité d'insertion sanitaire selon l'une quelconque des revendications 15 à 23, **caractérisée en ce que** le brise-jet (25) ainsi que de préférence également le redresseur d'écoulement (26) et éventuellement aussi ladite au moins une pièce à insérer (19, 20) prévue entre le brise-jet (25) et le redresseur d'écoulement (18) comportent respectivement une ouverture d'insertion (29, 34, 35), cette (ces) ouverture(s) d'insertion étant traversée(s) par le boîtier d'amortisseur (12).

25. Unité d'insertion sanitaire selon l'une quelconque des revendications 1 à 24, **caractérisée en ce que** le piston d'amortisseur (13) refoule, pendant un mouvement de glissement en cours d'utilisation, l'huile ou le fluide visqueux similaire depuis la position de repos jusqu'à la position ouverte à travers au moins un canal de communication et depuis la position ouverte jusqu'à la position de repos à travers au moins un canal de reflux.

26. Unité d'insertion sanitaire selon l'une quelconque des revendications 23 à 25, **caractérisée en ce qu'**il est prévu sur le boîtier d'amortisseur (12), du côté de la périphérie extérieure, une butée d'insertion (33), et **en ce que** le boîtier d'amortisseur (12) peut être inséré dans l'ouverture d'insertion (29) dans le brise-jet (25), jusqu'à ce que la butée d'insertion (33) s'applique sur une butée opposée sur le brise-jet (25).

27. Unité d'insertion sanitaire selon la revendication 25 ou 26, **caractérisée en ce que** le piston d'amortisseur (13) comporte au niveau de sa périphérie extérieure au moins une rainure ouverte en direction de la périphérie (14), qui délimite avec la périphérie intérieure de boîtier du boîtier d'amortisseur (12) ledit au moins un canal de reflux.

28. Unité d'insertion sanitaire selon l'une quelconque des revendications 25 à 27, **caractérisée en ce que** ledit au moins un canal de communication comporte côté amont une entrée de canal, qui est disposée sur le côté frontal de piston du piston d'amortisseur (13) tourné vers le fond de boîtier du boîtier d'amortisseur (12).

29. Unité d'insertion sanitaire selon la revendication 28, **caractérisée en ce que** ledit au moins un canal de communication présente côté aval une partie de canal, qui est prévue de préférence dans un creux en forme de rainure (44) entre la tige de piston (23) et une paroi périphérique intérieure, ladite paroi périphérique intérieure entourant une ouverture d'insertion (45) dans le piston d'amortisseur (13) hébergeant en elle-même une extrémité de tige de la tige de piston (23).

30. Unité d'insertion sanitaire selon l'une quelconque des revendications 1 à 29, **caractérisée en ce que** l'amortisseur de mouvement comporte une phase de pression active sous la pression de l'eau qui arrive, pendant laquelle la soupape se déplace depuis sa position de repos jusqu'à sa position ouverte, et une phase de traction, pendant laquelle il se produit un mouvement de rappel du piston d'amortisseur depuis la position ouverte jusqu'à la position de repos de la soupape.

31. Unité d'insertion sanitaire selon la revendication 30, **caractérisée en ce que** la phase de pression de l'amortisseur de mouvement est plus dure que la phase de traction.

32. Unité d'insertion sanitaire selon l'une quelconque des revendications 25 à 31, **caractérisée en ce qu'**il est prévu, sur le côté frontal du piston d'amortisseur (13) orienté à l'opposé à la direction d'écoulement de l'unité d'insertion (1, 2, 3, 4, 5, 50, 60), un joint d'étanchéité annulaire (36), ledit joint d'étanchéité annulaire (36) fermant ledit au moins un canal de reflux pendant un mouvement de glissement du piston d'amortisseur (13) depuis la position de repos jusqu'à la position ouverte.

33. Unité d'insertion sanitaire selon la revendication 12 ou selon l'une quelconque des revendications 13 à 32 en se référant à la revendication 12, **caractérisée en ce que** le piston de soupape (10) de préférence en forme de plateau porte une couche superficielle (40) en un matériau élastique au moins dans la zone annulaire du côté frontal de piston côté amont qui s'applique dans la position de repos sur le siège de soupape (16).

34. Unité d'insertion sanitaire selon la revendication 12 ou l'une quelconque des revendications 13 à 33 en se référant à la revendication 12, **caractérisée en ce que** le piston de soupape (10) porte sur son côté frontal tourné vers le siège de soupape (16) une couche superficielle (40) en un matériau élastique, qui est montée de façon déplaçable dans la direction radiale sur le piston de soupape (10).

35. Unité d'insertion sanitaire selon la revendication 34, **caractérisée en ce que** la couche superficielle (40) est réalisée en forme de disque annulaire et **en ce que** l'ouverture de disque annulaire de cette couche superficielle (40) est traversée par un pivot (47) qui fait saillie sur le piston de soupape (10).

36. Unité d'insertion sanitaire selon la revendication 34, **caractérisée en ce qu'**au moins un pivot d'emboîtement est formé sur le côté plat de la couche superficielle (40) tourné vers le piston de soupape (10), ledit pivot d'emboîtement étant maintenu dans une ouverture de pivot associée du piston de soupape (10).

37. Unité d'insertion sanitaire selon la revendication 13 ou selon l'une quelconque des revendications 14 à 36 en se référant à la revendication 13, **caractérisée en ce que** le bord périphérique réalisé en forme de siège de soupape (16) dans le boîtier d'insertion (6) comporte au moins un creux (41) dans le bord, ledit creux (41) étant perméable à l'eau également dans la position de repos de la soupape.

38. Unité d'insertion sanitaire selon la revendication 12 ou selon l'une quelconque des revendications 13 à 37 en se référant à la revendication 12, **caractérisée en ce qu'**il est prévu sur le côté amont du boîtier d'insertion (6) une pièce intermédiaire en forme d'anneau ou de douille (39), dans laquelle ladite pièce intermédiaire (39) comporte l'ouverture de passage qui fait office de siège de soupape (16).

39. Unité d'insertion sanitaire selon la revendication 38, **caractérisée en ce qu'**un tamis d'entrée ou un tamis de filtre (30) et de préférence aussi un régulateur de débit (31) disposé entre ceux-ci est maintenu sur le côté amont de la pièce intermédiaire (39).

40. Unité d'insertion sanitaire selon l'une quelconque des revendications 34 à 39, **caractérisée en ce que** la couche superficielle (40) s'accroche par sa région de bord périphérique derrière le piston de soupape (10) et en particulier derrière une région partielle du piston de soupape (10) qui fait saillie à la manière d'une bride.

41. Unité d'insertion sanitaire selon la revendication 12 ou selon l'une quelconque des revendications 13 à 40 en se référant à la revendication 12, **caractérisée en ce qu'**il est prévu sur le côté aval du siège de soupape (16) des ailettes de guidage ou des nervures de guidage (64), qui forment pendant le mouvement de glissement du piston de soupape (10) chaque fois un guidage de piston linéaire pour le piston de soupape (10).

42. Unité d'insertion sanitaire selon la revendication 41, **caractérisée en ce que** la couche superficielle (40) présente une bride annulaire saillante en périphérie (65), et **en ce que** les ailettes de guidage ou les nervures de guidage (64) agissent sur la bride annulaire (65) de la couche superficielle (40).

43. Utilisation d'une unité d'insertion sanitaire selon l'une quelconque des revendications 1 à 42, **caractérisée en ce que** l'unité d'insertion sanitaire (5) est intercalée dans une soupape d'équerre ou une soupape de raccordement (7) d'une conduite d'eau sanitaire.

44. Utilisation d'une unité d'insertion sanitaire selon l'une quelconque des revendications 1 à 42, **caractérisée en ce que** l'unité d'insertion sanitaire (1, 2, 3, 4, 50, 60) est montée dans une sortie d'eau d'une robinetterie sanitaire (9).
